# EUROPEAN PATENT APPLICATION

(11) **EP 4 811 614 A1**
(43) Date of publication of application: **23.09.2026**
(21) Application number: 24890994.7
(22) Date of filing: 11.06.2024
(51) Int. Cl.: H02K 3/04, H02K 3/12, H02K 15/06

(54) **ROTARY ELECTRIC MACHINE AND METHOD FOR PRODUCING STATOR IN ROTARY ELECTRIC MACHINE**

(30) Priority: 14.11.2023 JP 2023193993
(71) Applicant: Hitachi Industrial Equipment Systems Co., Ltd., Tokyo 101-0021 (JP)
(72) Inventor: ENOMOTO, Yuji, Tokyo 100-8280 (JP); TOKOI, Hirooki, Tokyo 100-8280 (JP); ASAUMI, Yusuke, Tokyo 100-8280 (JP); TAKEUCHI, Keisuke, Tokyo 100-8280 (JP); OHASHI, Hironori, Tokyo 101-0021 (JP); KIMURA, Mamoru, Tokyo 101-0021 (JP); SAKAI, Toru, Tokyo 101-0021 (JP); AMAIKE, Masaru, Tokyo 101-0021 (JP)
(74) Representative: MERH-IP Matias Erny Reichl Hoffmann Patentanwälte PartG mbB
(86) International application number: PCT/JP2024/021122
(87) International publication number: WO 2025/104947

(57) **Abstract**

A stator coil of a rotary electric machine is configured as a concentric-winding coil. Hairpin-shaped coil pieces 10, 11, 20, 21, 30, and 31 formed of flat wires are inserted from one axial side and the other axial side and interconnected to form the stator coil. A linear portion of each coil piece has a length equal to half of an axial length of the stator core, and protrusions or recesses are formed at both leg end portions. The protrusions and the recesses are fit together. Three types are central coil pieces 10 and 11 that connect between slots in a circumferential direction near a radial center of the slots, inner coil pieces 20 and 21 that connect in the circumferential direction with coil-end portions displaced radially inward relative to the radial positions of the slots, and outer coil pieces 30 and 31 that connect in the circumferential direction with coil-end portions displaced radially outward. The concentric-winding coil parts formed by the connected central coil pieces 10 and 11, the coil pieces 20 and 31, and the coil pieces 30 and 21 are configured to have equal lengths, thereby equalizing resistance values and improving assembly efficiency.

## Description

### TECHNICAL FIELD

The present invention relates to a rotary electric machine having a stator structure in which stator coils of a radial gap type rotary electric machine are concentrically wound for each phase using coils having different coil-end shapes, such that electrical resistance values are equalized among the respective phases, a method of manufacturing a stator of the rotary electric machine, and a control system of the rotary electric machine.

### BACKGROUND ART

Rotary electric machines (motors) used as power sources for industrial machines and for vehicle propulsion are required to achieve high efficiency. To improve efficiency of a rotary electric machine, it is necessary to reduce losses in the rotary electric machine, and a common design approach is to examine loss-reduction designs focusing on coil copper loss and core iron loss, which are the two major loss factors of the rotary electric machine. When output characteristics of required specifications of the rotary electric machine (rotational speed and torque) are determined, the mechanical loss is uniquely determined, and thus designs that reduce iron loss and copper loss become important. Iron loss can be reduced by used soft magnetic materials. In general rotary electric machines, electromagnetic steel sheets are adopted for core iron portions, and materials having different loss levels are adopted depending on factors such as a thickness thereof and Si content. As soft magnetic materials, there are high-performance materials such as iron-based amorphous metals having higher permeability and lower iron loss than those of electromagnetic steel sheets, FINEMET, and nanocrystalline materials expected to provide high magnetic flux density, However, in these material systems, the sheet thickness is extremely thin at 0.025 mm, and the hardness is as high as a Vickers hardness of 900, which is more than five times that of electromagnetic steel sheets, as a result, there are many challenges in manufacturing rotary electric machines at low cost, and thus these high-performance materials cannot be applied to rotary electric machines.

Copper loss is mainly determined by a relationship between a resistance value of the coil and a current, and therefore, countermeasures are taken such as reducing a coil resistance value through cooling and reducing a current value by suppressing a decrease in residual magnetic flux density of magnets. In addition, in recent years, in motors for vehicle propulsion, etc., designs have been adopted in which a ratio of a conductor to a cross-sectional area of a stator slot (space factor) is increased to reduce the resistance value to near a theoretical limit. However, coils using flat wires that allow a space factor inside a slot to be high have a complicated structure in routing of coil-end portions extending outward from both ends of the slot, and when these conductors are connected to each other by methods such as welding, the volume (wire length) of the coil-end portions increases, resulting in problems such as a slight increase in resistance value.

Patent Document 1 discloses technology in which two-legged hairpin-shaped conductor segments are inserted into stator coils of a motor, each segment is bent at each of coil-end portions on the insertion side and the side opposite from the insertion side, and bent conductors of other hairpin-shaped coils arranged in a circumferential direction are welded to form an annular coil. While this method has the effect of increasing the slot space factor, there is need to bend thick and rigid rectangular conductors during manufacture, and thus stress is applied to a stator core, damage occurs to slot insulation, residual stress from bending remains at a connecting portion, and it is difficult to ensure welding joint reliability, leaving room for improvement in the manufacturing method. In addition, since space around a welded portion needs to be ensured to perform welding, there is a problem in that the coil-end portions on the welding side become large.

As a method attempting to improve these issues, the technology of Patent Document 2 is known. Patent Document 2 shows a method in which a tip shape of a coil is used as a press fit tolerance so as to be mechanically and firmly joined. In addition, in Patent Document 2, by using a resin bobbin to securely ensure a coil insertion region and joining a concave and convex tip portion by applying stress, a highly reliable connection can be achieved.

A stator structure using a flat wire disclosed in Patent Documents 1 and 2 employs a winding structure referred to as wave winding. A reason is that the coil shape is identical in the circumferential direction, resulting in a structure in which forming hairpin-shaped coils and performing twisting and welding after insertion can be easily carried out. In a wave-winding structure, all coils are connected in the circumferential direction, so the number of coils per phase is equal to the number of slots per pole per phase. For this reason, when it is desired to increase the number of coils connected in parallel, it is necessary to increase the number of slots, which results in the drawback of low design freedom. From the viewpoint of design freedom, wave winding requires the number of turns per slot to be an even number, and when the number of slots per pole per phase is two, two coils, namely, a system-1 coil and a system-2 coil, are formed, but since the system-1 coil and the system-2 coil are alternately and evenly arranged in the same slot, magnetic interference between the two coils increases. Such magnetic interference can disturb current waveforms due to the influence of mutually induced electromotive force caused by deviations in current application timing, for example, when attempting to drive two coils by independently controlling the respective two coils.

To solve the above problems, a concentric-winding coil configuration can be considered. In general manufacture of a rotary electric machine, a concentric-winding stator is manufactured by winding a bundle of a plurality of thin round wires to form a coil and inserting the coil into a stator slot using a device referred to as an inserter. In this way, Patent Document 3 discloses a method in which a coil, which is wound while shaping a coil form in advance, is assembled to a stator core.

### CITATION LIST

### PATENT DOCUMENT

Patent Document 1: JP 2011-239651 A
Patent Document 2: WO 2020/017133 A1
Patent Document 3: JP 2011-160572 A

### SUMMARY OF THE INVENTION

### PROBLEMS TO BE SOLVED BY THE INVENTION

In the manufacturing method based on the technology disclosed in Patent Document 3, coils are assembled in directions such as an axial direction or from an inner diameter direction toward an outer periphery of semi-closed slots in which the tooth tips have a flange shape, and as a result, there is a problem in that a ratio of a cross-sectional area of a conductor to a cross-sectional area of a slot, that is, a space factor, cannot be increased. In addition, since shapes of the coil ends differ for each phase depending on the insertion order, it is difficult to achieve uniform coil resistance values and inductance values.

The invention has been made in view of the above background, and an object thereof is to increase the space factor in slots by configuring a concentric-winding stator of a rotary electric machine using a combination of hairpin-shaped conductors (coil segments) formed of flat wires, and to configure the coil-end shapes of the coils of each phase so that there is no interference with other phases. In addition, coil lengths of respective coil layers are made identical to realize configuration of a stator coil in which the coil resistance and the coil inductance can be made identical. Furthermore, a rotary electric machine in which assemblability of stator coils is improved is provided.

### SOLUTIONS TO PROBLEMS

The features of the invention for solving the above-described problems are, for example, as follows.

According to a feature of the invention, in a distributed-winding radial-gap rotary electric machine, a stator coil shape is configured to realize a concentric-winding structure by using hairpin-shaped or U-shaped coil pieces formed of flat wire and by connecting between slots. A straight portion (linear portion) of each coil piece has a length of approximately half of an axial length of a stator core, and fitting convex shapes or recesses that can be engaged with each other are formed at both leg end portions of the coil piece. Coil-end shapes of the coil pieces for forming the concentric-winding structure differ for each phase, three types of coil pieces are prepared, and the three types has a structure in which slots are connected in the circumferential direction at the same radial position of the slots (insertion holes) or with a circumferential offset of one insertion hole (a central coil piece), a structure in which the coil-end portion is offset radially inward from the radial position of the slot and connects the slots in the circumferential direction (an inner coil piece), and a structure in which the coil-end portion is offset radially outward from the radial position of the slot and connects the slots in the circumferential direction (an outer coil piece). In this instance, since a coil connected with a coil-end portion offset radially outward has a larger outer diameter than a coil connected with a coil-end portion offset radially inward, the coil-end length becomes longer, resulting in a longer overall coil circumferential length and an increased resistance value. To balance this, the coil on one axial side is connected using an inwardly arranged coil-end portion, while the coil on the other axial side is connected using an outwardly arranged coil-end portion. As a result, the difference in circumferential length between the inner coil piece and the outer coil piece is eliminated, and the coil resistance values can be balanced. The central coil, which is connected in the circumferential direction at a position substantially near the radial center in the slot, is designed such that a circumferential length is equal to that of a coil formed by connecting the inner coil piece and the outer coil piece, that is, the resistance values are matched. Accordingly, even with a concentric winding configuration formed using flat conductors, the resistance and inductance of the coils can be made uniform.

According to another feature of the invention, each coil piece is formed of a flat wire, and includes two linear portions that are accommodated in slots spaced apart in the circumferential direction, and a coil-end portion that is formed to extend outward in the rotating axis direction from the linear portions and that connects the two linear portions. The coil-end portion is formed by two extending portions extending outward in the rotating axis direction from the linear portions of the coil piece, and a connecting portion that connects end portions of the extending portions in the circumferential direction. After the stator coil is connected, the connecting portions of the central coil pieces are arranged so as to be aligned in the radial direction, and by providing an angle such that the extending portions of the inner coil pieces are bent inward in the radial direction, the connecting portions of the inner coil pieces are arranged to be stacked in the rotating shaft direction at a position radially inward of the stacked portion of the central coil pieces. An angle is provided such that the extending portions of the outer coil pieces are bent outward in the radial direction, and the connecting portions of the outer coil pieces are arranged to be stacked in the rotating shaft direction at a position radially outward of the stacked portion of the connecting portions of the central coil pieces. An inward bending angle of the extending portion with respect to the linear portion of the inner coil piece is greater than 0 degrees and 45 degrees or less, and an outward bending angle of the extending portion with respect to the linear portion of the outer coil piece is greater than 0 degrees and 45 degrees or less. With such shapes of the inner coil pieces and the outer coil pieces, when inserting the coil pieces into the slots of the stator core from both sides in the rotating shaft direction, it is possible to assemble the stator by inserting the central coil piece, the inner coil piece, and the outer coil piece one by one in the rotating axis direction.

According to still another feature of the invention, the stator core includes a core-back core and a plurality of tooth cores combined with the core-back core, and the tooth cores are formed of a low-loss soft magnetic material. In addition, a resin bobbin configured to accommodate a plurality of flat wires in the radial direction is disposed in each slot between adjacent tooth cores. Note that, to further improve coil assemblability, the stator core is preferably formed in a split configuration in the rotating axis direction.

### EFFECTS OF THE INVENTION

By adopting the coil configuration described above, it is possible to form concentric-winding coils having a high conductor space factor and small variations in coil resistance between phases. In this way, motor design and system design that take advantage of the characteristics of the concentric-winding coil configuration become possible. In addition, since the number of coils can be set independently of the number of slots per pole per phase, a degree of freedom in series and parallel circuit configurations is increased, making it easy to implement design changes to accommodate different voltage specifications and different frequencies (rotational speed and torque). In other words, with concentric winding, it is possible to design the number of turns per slot to be an odd number, which cannot be realized with wave winding, thereby increasing the design flexibility for accommodating the specification changes. Furthermore, since the coils have a structure that is independent between systems, magnetic interference can be reduced, resulting in fewer restrictions on the number of drive circuits used. Moreover, during the concave-convex fitting assembly of the stator coils, by setting an appropriate coil insertion order, the coils can be connected while simultaneously performing the concave-convex fitting process at the time of insertion, thereby significantly improving assemblability of the stator.

### BRIEF DESCRIPTION OF THE DRAWINGS

[Fig. 1A] A perspective view illustrating coil shapes (three phases for one pole) that realize concentric winding of rectangular conductors in a stator of a radial-gap-type rotary electric machine 1 according to an embodiment of the invention.
[Fig. 1B] A projection view of a lead-out wire side when viewed from one side of a rotating axis of Fig. 1A.
[Fig. 1C] A projection view of an opposite lead-out side when viewed in a direction of arrow 70 from the other side of the rotating axis of Fig. 1A.
[Fig. 2A] A perspective view of a stator core 3 of Fig. 1.
[Fig. 2B] An axial projection view of the stator core 3 of Fig. 1 (before mounting the resin bobbin 65).
[Fig. 2C] A perspective view of the bobbin 65 alone when viewed from one side.
[Fig. 2D] A perspective view of the bobbin 65 alone when viewed from the other side.
[Fig. 2E] An axial projection view of the stator core 3 of Fig. 1 (after mounting the bobbin 65).
[Fig. 3A] A partial projection view of a stator 2 illustrated in Fig. 1 when viewed from the opposite lead-out side 2b.
[Fig. 3B] A perspective view when viewed from the inner side of Fig. 3A.
[Fig. 3C] A perspective view of a central coil piece 11 illustrated in Fig. 3B.
[Fig. 3D] A perspective view of an inner coil piece 21 illustrated in Fig. 3B.
[Fig. 3E] A perspective view of an outer coil piece 31 illustrated in Fig. 3B.
[Fig. 4A] A partial view of the stator 2 illustrated in Fig. 1 when viewed from a lead-out side 2a.
[Fig. 4B] A perspective view of the stator 2 illustrated in Fig. 4A when viewed from an inner side.
[Fig. 4C] A perspective view of a central coil piece 10 illustrated in Fig. 4B.
[Fig. 4D] A perspective view of an inner coil piece 20 illustrated in Fig. 4B.
[Fig. 4E] A perspective view of an outer coil piece 30 illustrated in Fig. 4B.
[Fig. 4F] A perspective view of a lead-out coil piece 41 illustrated in Fig. 4B (lead-out coil pieces 42 to 46 are the same).
[Fig. 5A] A perspective view illustrating the entire stator 2 after coil formation of the rotary electric machine 1 according to the present embodiment.
[Fig. 5B] A projection view of the lead-out side 2a of the stator 2 of Fig. 5A.
[Fig. 5C] A perspective view of the opposite lead-out side 2b of the stator 2 of Fig. 5A (however, illustrated with the rotating axis inverted).
[Fig. 6A] A diagram illustrating a stator 202 of a conventional example, and is a perspective view illustrating a configuration for one phase of the stator 202 having a wave-winding coil structure using flat wires.
[Fig. 6B] A circuit diagram illustrating a two-parallel delta connection method of the stator 202.
[Fig. 6C] A connection diagram of the stator 202.
[Fig. 7A] A stator 202A of another conventional example, and is a perspective view illustrating a configuration for one phase of a stator having a wave-winding structure using flat wires.
[Fig. 7B] A circuit diagram illustrating a two-series delta connection method of the stator 202A.
[Fig. 7C] A connection diagram of the stator 202A.
[Fig. 8A] A perspective view illustrating a configuration for one phase of the stator 2 having a concentric-winding structure using flat wires in the rotary electric machine 1 of the present embodiment.
[Fig. 8B] A circuit diagram illustrating a two-parallel delta connection method of the stator 2 of Fig. 8A.
[Fig. 8C] A connection diagram of the stator 2 of Fig. 8A.
[Fig. 9A] A perspective view illustrating a configuration for one phase of the stator 2 having a concentric-winding structure using flat wires in the rotary electric machine 1 of the present embodiment.
[Fig. 9B] A circuit diagram illustrating a two-series delta connection method of the stator 2 of Fig. 9A.
[Fig. 9C] A connection diagram of the stator 2 of Fig. 9A.
[Fig. 10A] A circuit diagram illustrating an eight-parallel delta connection method for one phase of a stator having a concentric-winding structure using flat wires in the rotary electric machine 1 of the present embodiment.
[Fig. 10B] A connection diagram of the stator 2 of Fig. 10A.
[Fig. 11] A circuit diagram of a control system that drives the rotary electric machine 1 having the concentric-winding stator 2 according to an embodiment of the invention using two inverter devices.
[Fig. 12] A diagram illustrating a coil-slot arrangement model of a stator having a wave-winding structure using flat wires as a conventional example.
[Fig. 13A] A diagram illustrating the linked magnetic flux of the coil-slot arrangement model of Fig. 12.
[Fig. 13B] A diagram illustrating results of linked magnetic flux calculation by magnetic field analysis using the model of Fig. 13A.
[Fig. 14] A diagram illustrating a coil-slot arrangement model of the stator 2 having a concentric-winding structure using flat wires according to the present embodiment.
[Fig. 15A] A diagram illustrating the linked magnetic flux of the stator 2 of Fig. 14.
[Fig. 15B] A diagram illustrating results of linked magnetic flux calculation by magnetic field analysis using the model of Fig. 15A.
[Fig. 16A] A diagram illustrating an assembly sequence of the concentric-winding stator according to the present embodiment, and is a projection view of the insertion/assembly side (lead-out side) of the stator 2 in step 1.
[Fig. 16B] A perspective view of the stator 2 in the state of Fig. 16A.
[Fig. 16C] A projection view of the insertion/assembly side (lead-out side) of the stator 2 in step 2 following Fig. 16A.
[Fig. 16D] A perspective view of the stator 2 in the state of Fig. 16C.
[Fig. 16E] A projection view of the insertion/assembly side (lead-out side) of the stator 2 in step 3 following Fig. 16C.
[Fig. 16F] A perspective view of the stator 2 in the state of Fig. 16E.
[Fig. 16G] A projection view of the insertion/assembly side (lead-out side) of the stator 2 in step 4 following Fig. 16E.
[Fig. 16H] A perspective view of the stator 2 in the state of Fig. 16G.
[Fig. 17] A perspective sectional view illustrating an air compressor 100 driven by the rotary electric machine of the invention.

### MODE FOR CARRYING OUT THE INVENTION

Hereinafter, an embodiment of a rotary electric machine 1 of the invention will be described using the drawings, etc. The following description shows a specific example of content of the invention, and the invention is not limited to these descriptions. Various changes and modifications are possible by those skilled in the art within the scope of the technical ideas disclosed in this specification. Furthermore, in all drawings used to describe the invention, parts having the same function are designated by the same reference numerals, and repeated descriptions are omitted in some cases.

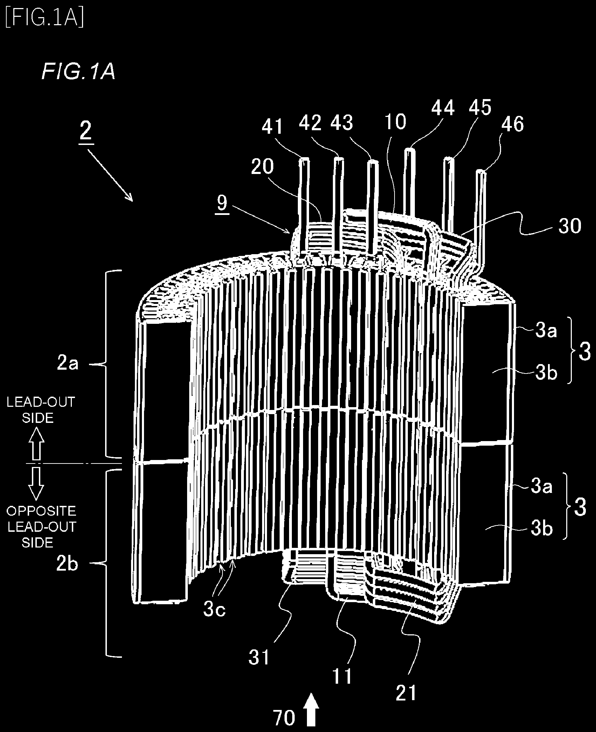

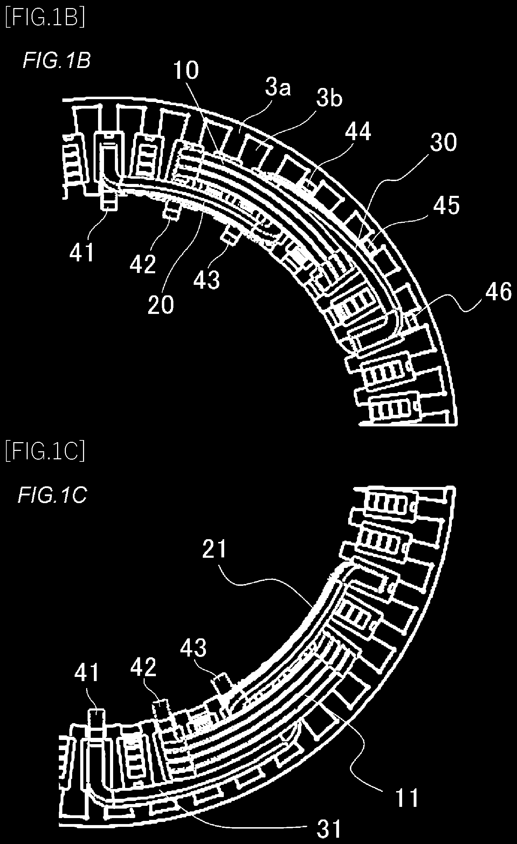

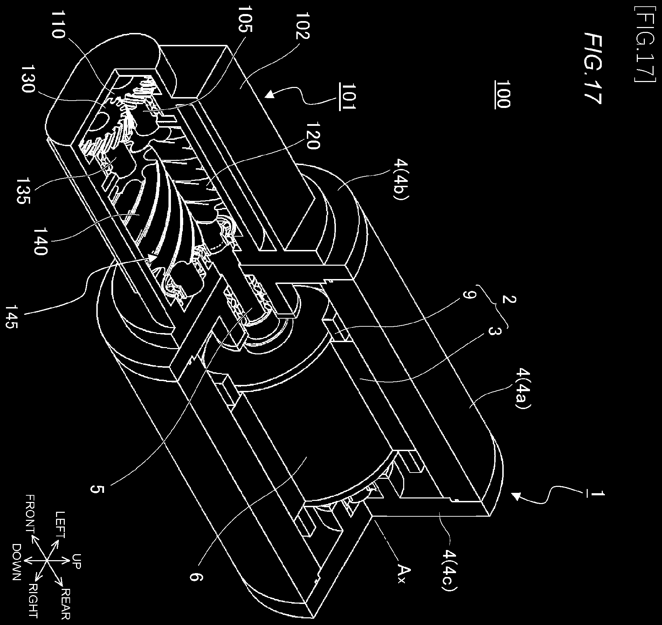

The rotary electric machine 1 of the present embodiment is used to drive various devices. Fig. 17 illustrates an example, illustrating a screw-type air compressor 100 driven by the rotary electric machine 1. The air compressor 100 includes the rotary electric machine 1 that supplies rotational power, and an air end 101 that generates compressed air by using the rotational force of the rotary electric machine 1. The rotary electric machine 1 is referred to as an embedded magnet synchronous motor, in which a rotor 6 and a stator 2 are housed inside a housing 4. The housing 4 includes a cylindrical body portion 4a having openings at a front side and a rear side, a front end bracket 4b attached to the front opening of the body portion 4a, and a rear end bracket 4c attached to the rear opening of the body portion 4a. A through-hole is formed in the front end bracket 4b, and one end of a rotating shaft 5 to which the rotor 6 is fixed protrudes from the inside of the housing 4 toward the outside on the front side. The stator 2 includes a stator core 3 and a stator coil 9 wound around the stator core 3. In Fig. 17, an end-core portion shape of the stator coil 9 is schematically illustrated, and a detailed shape thereof is a shape illustrated in Figs. 1 to 5, which will be described later.

An M-rotor 120 of the air end 101 is connected to the rotating shaft 5 of the rotary electric machine 1 by a connecting means (for example, a spline, coupling, gear, etc.), and supplies the rotational power of the rotary electric machine 1 to a first shaft 105 of the air end 101. Here, the rotating shaft 5 and the first shaft 105 are directly connected, and a rotational axis thereof is Ax. A first bevel gear 110 is provided at a distal end of the first shaft 105. The bevel gear 110 is meshed with an adjacent second bevel gear 130, thereby rotating the second bevel gear 130 at the same speed as that of the first bevel gear 110 in an opposite direction. Since the second bevel gear 130 is provided at a distal end of a second shaft 135, an F-rotor 140 fixed to the second shaft 135 rotates at the same speed as, but in the opposite direction to, the M-rotor 120 fixed to the first shaft 105.

The M-rotor 120 and the F-rotor 140 rotate due to rotation of the rotary electric machine 1, and air is drawn in through a suction port of the M-rotor 120 (not seen in the drawings). When the M-rotor 120 and the F-rotor 140 rotate further, tooth profiles of the respective rotors disengage, and air is drawn to fill tooth spaces. When the M-rotor 120 and the F-rotor 140 rotate further and the air is blocked by a wall of a casing 102, suction is completed. The air trapped between the tooth spaces and the casing is compressed by the meshing of the rotors 120 and 140. In this manner, as the rotors 120 and 140 rotate, the air moves in an axial direction while being further compressed between the tooth spaces 145 and the casing 102, reaching a discharge port (not seen in the drawings) where the air attains a predetermined pressure. The compressed air is discharged from the discharge port formed in the casing 102.

Fig. 1A is a partial perspective view of the stator 2 of the rotary electric machine 1 according to an embodiment of the invention. The rotary electric machine 1 of the present embodiment is of a radial-gap type, and the coils of the stator 2 use so-called rectangular conductor wires (hereinafter referred to as "flat wires") having a rectangular cross-sectional shape perpendicular to a longitudinal direction. The stator coil 9 is formed by concentrically winding this flat wire. In Fig. 1A, in the stator coil 9, a coil shape for three phases of one pole is partially illustrated.

The stator 2 has a total of 48 slots, and the rotor has 8 poles. Coil pieces 10, 11, 20, 21, 30, 31, and 41 to 46 arranged in each slot are flat wires having a rectangular cross-sectional shape. Here, the stator 2 is configured to be divided into two parts in a rotating axis Ax direction, namely, a lead-out side 2a and an opposite lead-out side 2b. On the lead-out side 2a of the stator coil 9, a plurality of coil pieces (10, 20, 30) that connect between slots, and a plurality of lead-out coil pieces 41 to 46 drawn out for connection of the stator coil 9 are used. On the opposite lead-out side 2b, a plurality of coil pieces (11, 21, 31) that connect between slots of the stator core 3 are used. A concentric-winding coil (referred to as a U-phase coil) is formed by combining the coil pieces (10, 20, 30) having a structure that connects the slots of the stator core 3 on the lead-out side 2a in the circumferential direction of the slots, with the coil pieces (11, 21, 31) having a structure that connects the slots of the stator core 3 on the opposite lead-out side 2b in the circumferential direction at the same radial position as slots 3c.

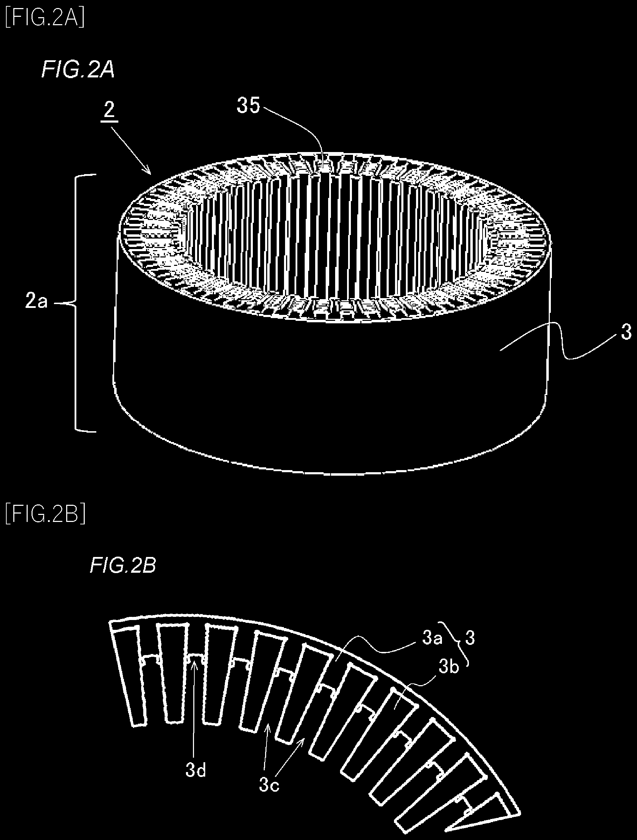

Hereinafter, the detailed shape of the stator core 3 will be described with reference to Figs. 2A to 2E. Fig. 2A is a perspective view of the stator core 3 alone on the lead-out side 2a, illustrating a state in which a bobbin 65 is mounted but the stator coil 9 is not wound. Fig. 2B is a partially enlarged view of Fig. 2A as seen from one side in the rotating axis direction (the lead-out side) (however, the bobbin 65 is not mounted). As illustrated in Figs. 2A and 2B, the stator core 3 has a core-back core 3a formed on the outer peripheral side, and tooth cores 3b formed by cutting amorphous metal foil strips into a trapezoidal shape and laminating the amorphous metal foil strips are arranged in the tooth portions, so that a total of 48 slots 3c are formed in the circumferential direction. In the rotary electric machine 1 that is rotated at high speed, a frequency of a supplied voltage is high, and iron loss in the tooth portions becomes large. Therefore, it is desirable to use a low-loss magnetic material. In the present embodiment, the tooth portions are manufactured from a material different from that of the core-back core 3a (electromagnetic steel sheet). Note that, instead of amorphous material, the tooth portions may be formed of a nanocrystalline alloy material such as Finemet, or a nanocrystalline alloy having high saturation magnetization. In addition, when the tooth portions are manufactured from the same material as that of the core-back core 3a using an electromagnetic steel sheet, the use of a low iron-loss material such as a thin steel sheet containing 6.5% Si may also be considered as a measure for improving characteristics.

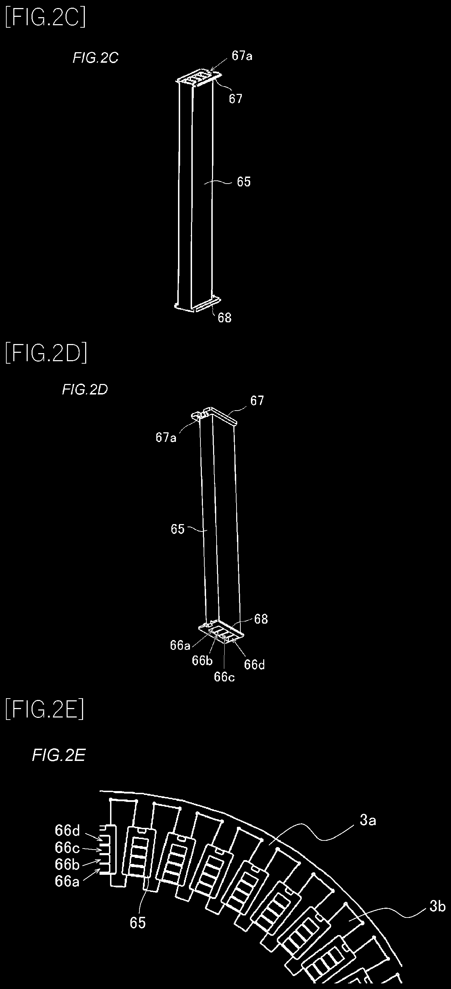

As illustrated in Fig. 2B, in the stator core 3, the tooth cores 3b having a trapezoidal cross-sectional shape perpendicular to the rotating axis are combined, and the core-back core 3a for holding the tooth cores 3b is formed of an electromagnetic steel sheet. Since the magnetic flux density in the core-back portion is relatively low and the influence of harmonics is small compared to the tooth portions, it is sufficient to use a relatively low-loss material. In this structure, since amorphous materials are difficult to punch into complex shapes, the cross-sectional shape is set to a trapezoidal shape that can be formed only by cutting, which influences the design of the core-back core 3a. The insulating resin bobbin 65 is assembled in accordance with this combined core shape. Fig. 2C is a perspective view of the bobbin 65 as seen from an inner peripheral side, and Fig. 2D is a perspective view of the bobbin 65 as seen from an outer peripheral side.

The bobbin 65 is formed to have a length equal to approximately half of the total length of the stator core 3 in a rotating axis direction, that is, approximately the same length as each of the lead-out side 3a and the opposite lead-out side 3b of the stator core 3 (strictly speaking, the bobbin 65 is longer by the amount corresponding to flange portions 67 and 68), and is formed to have the same width as the width of the slot 3c as viewed in the circumferential direction. On the inner side of the bobbin 65, a plurality of (m) insertion holes 66a to 66d (here, m = 4) for inserting rectangular conductors in a direction parallel to the rotating axis direction is formed from the radially inner side toward the outer side. Partition walls are provided at boundaries of the insertion holes 66a to 66d, respectively, thereby providing a structure that reliably insulates each coil piece individually. The flange portions 67 and 68 are provided at both axial end portions of the bobbin 65, and also function to hold end surfaces of the tooth core 3b in the axial direction. On the inner peripheral side of the flange portions 67 and 68, claw portions 67a and 68a having contour portions projecting in a claw shape are formed, respectively, and are assembled to insert the bobbin 65 from the radially inner side toward the radially outer side of the stator core 3. In this instance, the claw portions 67a and 68a are fit into recesses 3d that are formed on the inner peripheral side of the core-back core 3a and extend continuously in the rotating axis direction. In a state in which all the bobbins 65 are assembled into the slots 3c of the stator core 3, the structure restrains the tooth cores 3b in both the circumferential direction and the axial direction. Fig. 2E illustrates a state in which the bobbins 65 are mounted from the state illustrated in Fig. 2B.

Returning again to Fig. 1, between the slots 3c of the stator 2 on the lead-out side 2a, an inner coil piece 20 having a shape in which coil ends are arranged and connected between slots on a radially inner side than a radial position where the conductor is inserted into the slots, and an outer coil piece 31 having a structure in which the slots of the stator 2 on the opposite lead-out side 2b are connected between slots on a radially outer side than a radial position of the conductor are combined to form a concentric-winding coil (hereinafter, a coil having this structure is referred to as a V-phase coil).

Furthermore, an outer coil piece 30 having a shape in which the slots of the stator 2 on the lead-out side 2a are connected with coil ends arranged on a radially outer side than the radial position where the conductor is inserted into the slots, and an inner coil piece 21 having a structure in which the slots of the opposite lead-out side stator 2b are connected on a radially inner side than the radial position of the conductor are combined to form a concentric-winding coil (hereinafter, a coil having this structure is referred to as a W-phase coil).

As described above, since the coil ends passing along the inner peripheral side (coil pieces 20 and 21) are shorter than the coil ends passing along the outer peripheral side (coil pieces 30 and 31), when connecting the coils, the outer coil piece 30 on the outer peripheral side is combined with the inner coil piece 21, and similarly, the outer coil piece 31 on the outer peripheral is combined with the inner coil piece 20, so that these coil lengths are made the same as the length formed by the central coil pieces 10 and 11. Thus, the U-phase, V-phase, and W-phase coils are configured, thereby preventing occurrence of differences in resistance values among the U, V, and W-phases. In addition, the portions of the coil pieces 20 and 21 exposed from the stator core 3 (coil-end portions) are inclined toward the inner circumferential side, and wiring is arranged such that the coil-end portions are stacked in the rotating axis direction. Further, the portions of the coil pieces 30 and 31 exposed from the stator core 3 (coil-end portions) are inclined toward the outer circumferential side and are stacked in the rotating axis direction. As a result, when inserting each of the coil pieces (10, 11, 20, 21, 30, 31) and the lead-out coil pieces 41 to 46 into the slots 3c from both axial sides of the stator core 3, the stator coil 9 can be assembled by sequentially inserting all coil pieces in parallel with the axial direction, which provides an advantage.

As illustrated in the projected views of Fig. 1B and Fig. 1C, when coil pieces 10 and 11 having a structure that connects two slots circumferentially at the same radial position as the slot radial position are arranged, the coils exiting from the slots hidden by other coils need to be connected via a route passing either the inner circumferential side or the outer circumferential side. In addition, even when these are arranged circumferentially at intervals of 180 degrees in electrical angle, shapes thereof need to be configured so that no interference occurs. Even though Fig. 1A to Fig. 1C illustrate only one pole of the formed coils, this structure is repeated at an electrical angle of 180 degrees (a mechanical angle of 45 degrees) and coil pieces are arranged in all circumferential slots, thereby completing the stator coil 9 of the rotary electric machine 1.

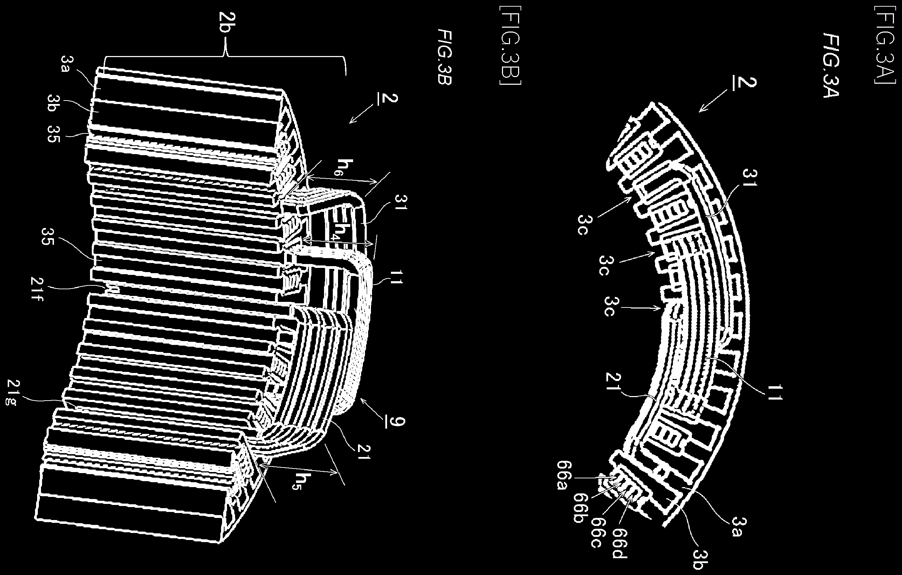

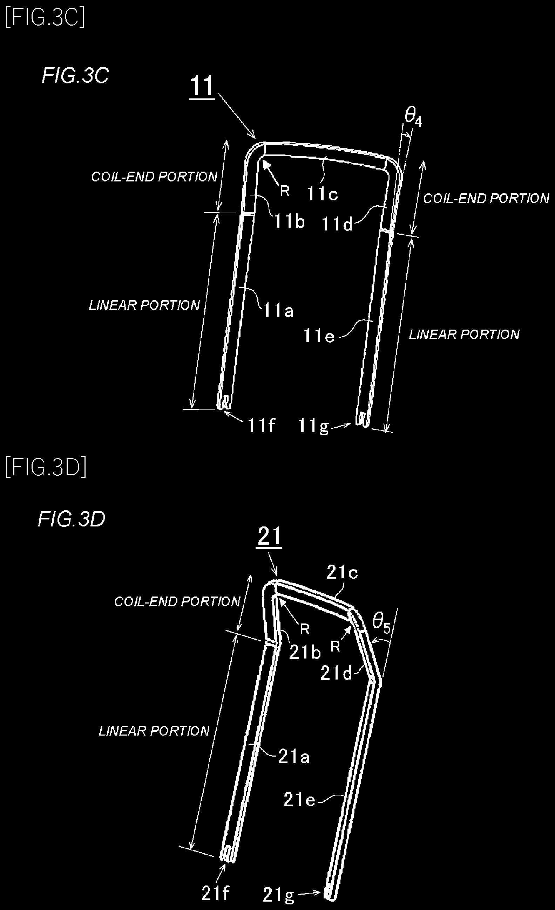

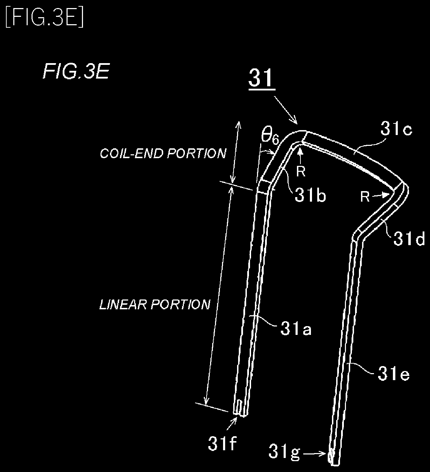

Fig. 3A to Fig. 3E are diagrams for describing a structure of the opposite lead-out side 2b of the stator 2 illustrated in Fig. 1. Fig. 3A illustrates a drawing in which a part of the stator coil 9 on the opposite lead-out side 2b is projected in the rotating shaft direction as viewed from an arrow 70 side of Fig. 1, and Fig. 3B is a perspective view from the inner circumferential side. Note that the coil piece 11 and the coil piece 21 illustrated in Fig. 3A and Fig. 3B are shifted in circumferential position from the view seen from the arrow 70 direction of Fig. 1A, which requires attention. The central coil piece 11, in which the coil end is arranged at the same radius as the conductor insertion position of the slot 3c, is configured as illustrated such that four types of coil pieces 11 having different radial sizes are arranged to connect from one of the four slot insertion holes 66a to 66d of the bobbin 65 to four insertion holes located five slots away in the circumferential direction. In this instance, the numbers of the insertion holes 66a to 66d, counted from the inner circumferential side, into which one end and the other end of each coil piece 11 are inserted are the same. For this reason, four types of coil pieces 11 having different sizes are prepared.

Fig. 3C illustrates a perspective view of the shape of the central coil piece 11. The coil piece 11 is a conducting wire formed by coating a soft copper wire having a rectangular cross section with insulating enamel baked on. The coil piece 11 is formed of linear portions 11a and 11e, which are portions accommodated in the slot 3c and formed in a straight shape, extending portions 11b and 11d, which are respectively connected to the linear portions 11a and 11e and extend outward in the rotating axis direction beyond the slot 3c, and a connecting portion 11c, which connects end portions separated from connecting parts of the extending portions 11b and 11d. The coil piece 11 including parts of the portions 11a to 11e is formed by bending a flat wire into a substantially U-shaped, so-called hairpin shape. Here, due to the overall arrangement space of the stator coil 9, in order to ensure a region on the inner circumferential side of the connecting portion 11c of the coil piece 11, it is preferable that the extending portions 11b and 11d of the coil piece 11 be bent slightly toward the radially outer side by an angle θ4 (θ4 can be less than several tens of degrees). In addition, a bending radius R (radius of curvature) at the connection part between the extending portion 11b and the connecting portion 11c is formed relatively small so as not to interfere with other coil pieces. Similarly, a bending radius R (radius of curvature) at the connection part between the extending portion 11d and the connecting portion 11c is also formed relatively small.

End legs of the central coil piece 11 have shapes such as recesses 11f and 11g. In this shape, a concave portion on the inner circumferential side is punched out by pressing, etc., and a plating layer having a thickness of about 10 µm is formed on the cut cross-sectional portion by electrolytic tin plating. Since the outer surface portion of the coil piece 11 is covered with enamel insulation, a plating layer is not formed there, and the plating layer is formed on the cut surface portions. As illustrated in Fig. 3B, a part of the coil end of the inner coil piece 21 (extending portions 21b and 21d) is arranged on the radially inner side of the connecting portion 11c of the central coil piece 11 so as to partially overlap in the rotating axis direction, and similarly, a part of the coil end of the outer coil piece 31 (extending portions 31b and 31d) is arranged so as to partially overlap in the rotating axis direction.

The inner coil piece 21 is formed in a substantially U shape, and includes linear portions 21a and 21e formed in a straight shape, extending portions 21b and 21d that extend outward in the rotating axis direction beyond the slot 3c, and a connecting portion 21c that connects the extending portions 21b and 21d between end portions separated in the axial direction. The extending portions 21b and 21d of the coil piece 21 are bent radially inward by an angle θ₅ with respect to the linear portions 21a and 21e. Further, due to the overall arrangement space of the stator coil 9, in order to ensure an arrangement space of a part on the inner circumferential side of the connecting portion 21c of the coil piece 21, a bending radius R at the connecting portion between the extending portion 21b and the connecting portion 21c and a bending radius R at the connecting portion between the extending portion 21d and the connecting portion 21c need to be relatively small so as not to interfere with other coil pieces.

The outer coil piece 31 is formed in a substantially U shape, and includes linear portions 31a and 31e formed in a straight shape, extending portions 31b and 31d that extend outward in the rotating axis direction beyond the slot 3c, and a connecting portion 31c that connects the extending portions 11b and 11d between end portions separated in the axial direction. The extending portions 31b and 31d of the coil piece 31 are bent radially outward by an angle θ₆ with respect to the linear portions 31a and 31e. Further, due to the overall arrangement space of the stator coil 9, in order to ensure an arrangement space of a part on the outer circumferential side of the connecting portion 31c of the coil piece 31, a bending radius R at the connecting portion between the extending portion 31b and the connecting portion 31c and a bending radius R at the connecting portion between the extending portion 31d and the connecting portion 31c need to be relatively small so as not to interfere with other coil pieces.

When the inner coil pieces 21 are assembled as illustrated in Fig. 3B, the four connecting portions 21c are arranged so as to overlap in the rotating axis direction. Similarly, four types of outer coil pieces 31 having different sizes are prepared, and when the outer coil pieces are assembled as illustrated in Fig. 3B, the four connecting portions 31c are arranged so as to overlap in the rotating axis direction.

As illustrated in Fig. 3B, four types of connecting portions 11c having different sizes in the four central coil pieces 11 are prepared, and the connecting portions 11c are arranged side by side in the radial direction from the inner side to the outer side at the same position in the rotating axis direction. The shape of the connecting portion 11c is not linear, but is formed in an arcuate shape along the circumferential direction of the stator core 3. The height of the coil-end portion of the coil piece 11 (height from the end of the stator core) is h₄. Further, four types of inner coil pieces 21 having different sizes are prepared, and connecting portions 21c thereof are arranged side by side at the same radial position so as to be stacked in the axial direction. The shape of the connecting portion 21c is not linear, but is formed in an arcuate shape along the circumferential direction of the stator core 3. A maximum height of the stacked coil-end portions of the coil pieces 21 (maximum height from the end of the stator core) is h₅. Further, four types of outer coil pieces 31 having different sizes are prepared, and connecting portions 31c thereof are arranged side by side at the same radial position so as to be stacked in the axial direction. A shape of the connecting portion 31c is not linear, but is formed in an arcuate shape along the circumferential direction of the stator core 3. A maximum height of the stacked coil-end portions of the coil pieces 31 (maximum height from the end of the stator core) is h₆. Here, the heights preferably satisfy relationships h₄ > h₅ and h₄ > h₆. The magnitude relationship between h₅ and h₆ is arbitrary.

As described above, the inner coil piece 21 is configured such that the flat wire rising from the linear portions 21a and 21e is bent radially inward so as not to interfere with the connecting portions 11c of the four central coil pieces 11 and so as not to protrude inward beyond a minimum inner diameter portion of the stator core 3. As illustrated in Fig. 3B, the coil piece 21 rising from the radially inner side of the slot 3c is configured to have the lowest coil height, and the coil piece 21 at the next radial position is arranged with a higher coil height such that the connecting portion 21c is placed above the innermost coil piece 21 by an amount corresponding to the wire thickness plus a slight clearance. A position of the connecting portion 21c of the coil piece 21 rising from the next radial position (the third insertion hole from the inner side) is set further upward, and a position of the connecting portion 21c of the coil piece 21 rising from the next radial position (the fourth insertion hole from the inner side) is set even further upward. Similarly to the central coil piece 11, the inner coil piece 21 has recesses 21f and 21g formed at the coil end portions (end portions of the linear portions 21a and 21e opposite to the coil-end side), and tin plating is applied to cut surfaces.

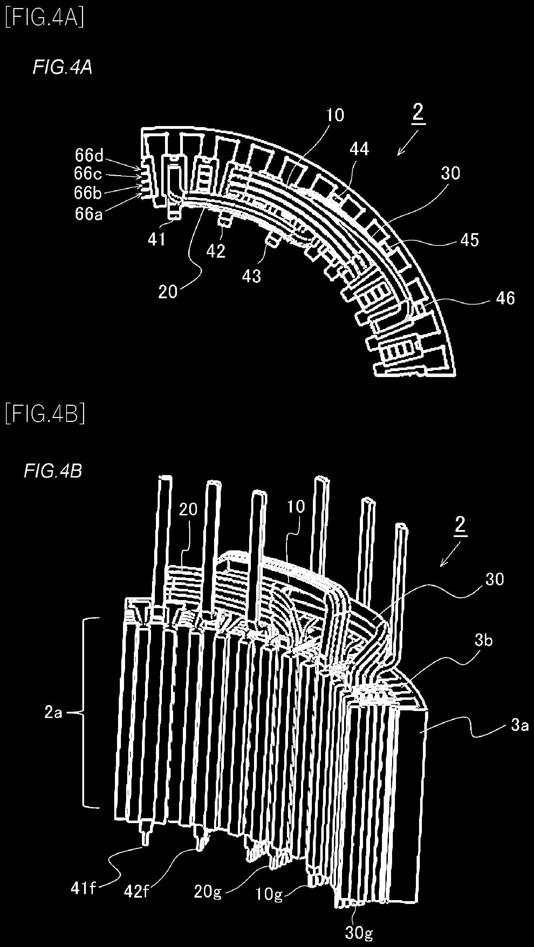

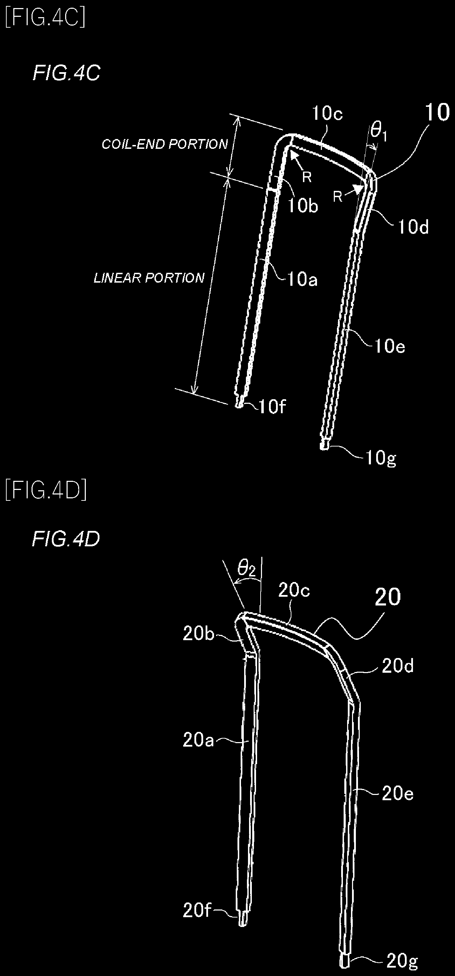

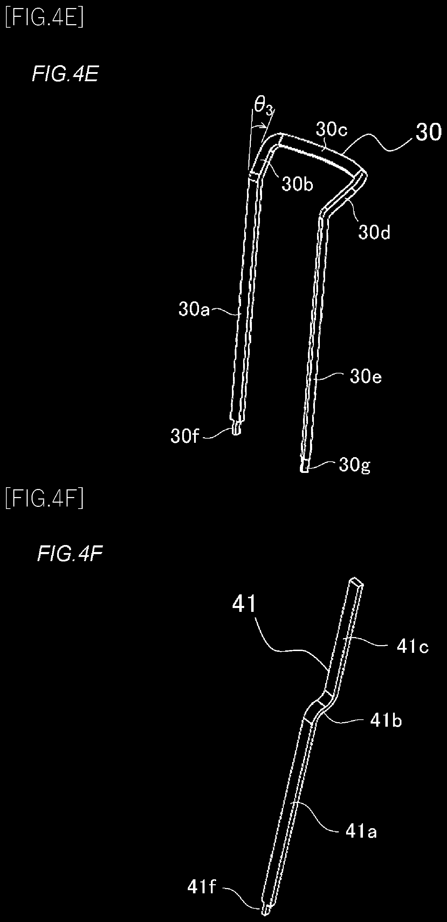

In Fig. 3B, only the portion of the slot 3c into which the coil piece 21 is inserted is illustrated in omission of the bobbin 65, so that the shapes and arrangement positions of the end portions 21f and 21g of the coil piece 21 can be seen. The concave-side coil piece 21 is set to be shorter than the axial length of the opposite lead-out side 2b of the stator core 3, so as not to protrude from an end portion of the stator core 3. The recesses 21f and 21g and fitting portions to be engaged with convex portions 20f and 20g described later with reference to Fig. 4 are designed to be arranged at positions located inward from the end portions by a predetermined distance. In the other coil pieces, that is, the central coil piece 11 and the outer coil piece 31 as well, the axial positions of the recesses 11f, 11g, 31f, and 31g formed at the end portions are the same.

The outer coil piece 31 is configured such that the flat wire rising from the linear portions 31a and 31e is bent radially outward so as not to interfere with the central coil piece 11. Since there is often sufficient space in the core-back portion, the outer coil piece 11 can be configured with a large outward bend. In the present embodiment as well, a bending angle θ₆ is set to be relatively large, about 45 degrees. In his instance, as illustrated in Fig. 3B, the coil piece 11 rising from the innermost slot insertion hole is configured such that the coil height of the connecting portion 11c is the highest, and the coil piece 11 in the second insertion hole is arranged below the coil piece 11 rising from the first insertion hole so that an amount corresponding to the wire thickness plus a slight clearance can be ensured for the coil height. Similarly, the connecting portion 11c of the coil piece 11 rising from the third insertion hole from the inner side is positioned further downward, and the connecting portion 11c of the coil piece 11 rising from the fourth insertion hole is positioned even further downward, and the shapes of the respective coil pieces 11 are designed accordingly. Recesses 31f and 31g are formed at the end portions of these outer coil pieces 11 in the same manner as for the inner coil piece 31, and tin plating is applied.

Fig. 4A to Fig. 4D are partial configuration diagrams for describing the axial-direction configuration (on the lead-out side) of the stator core 3 for constituting the stator 2 illustrated in Fig. 1A, and perspective views for describing the shapes of the respective coils. Fig. 4A illustrates a part of an axial projection view of the lead-out side 2a of the stator core 3, and Fig. 4B is a perspective view thereof. Since lead-out coil pieces 41 to 46 are present on the lead-out side 2a of the stator core 3, the straddle manner between the slots 3c differs from that in Fig. 3A and Fig. 3B.

Fig. 4C illustrates a perspective view of the central coil piece 10. The coil piece 10 is formed in a hairpin shape, in other words, a substantially U shape, and includes linear portions 10a and 10e formed in a straight shape, extending portions 10b and 10d that extend outward beyond the slot 3c, and a connecting portion 10c that connects end portions of the extending portions 11b and 11d separated in the axial direction. Among these portions, the extending portions 10b and 10d and the connecting portion 10c serve as a coil-end portion. The extending portions 10b and 10d of the coil piece 10 are bent radially outward by an angle θ₁ with respect to the linear portions 10a and 10e. In addition, due to the overall arrangement space of the stator coil 9, in order to ensure an arrangement space of a part on the outer circumferential side of the connecting portion 10c of the coil piece 10, the bending radius R of a connecting part between the extending portion 10b and the connecting portion 10c, and the bending radius R of a connecting part between the extending portion 10d and the connecting portion 10c, are made relatively small so as not to interfere with other coil pieces. The end portions of the coil piece 10 are formed (cut) as protrusions 10f and 10g. This dimensional relationship is set to a shape suitable for fitting by press-fitting with the recesses 11f and 11g of the connection-symmetric coil piece 11 (see Fig. 2C). In addition, tin plating is provided on the cut surfaces of the recesses 11f and 11g in the same manner as on the protrusions 10f and 10g.

The lead-out coil pieces 41 to 43 are accommodated in the innermost insertion hole 66a among the plurality of insertion holes 66a to 66d formed in the bobbin 65. For the inner coil piece 20, a concentric coil is formed such that the insertion holes 66b to 66d in which the lead-out coil piece 41 is positioned are connected via the outer coil piece 31 (see Fig. 3B) on the opposite lead-out side 2b, and by being connected to the insertion holes 66a to 66c of the slot 3c on the side spaced by five slots (37.5 degrees) in the circumferential direction, a structure in which the lead-out coil pieces 41 and 43 are connected is obtained. For a part of the central coil piece 10, a concentric coil is formed such that the innermost insertion hole 66a in which the lead-out coil piece 42 is positioned is connected via the central coil piece 11 (see Fig. 3B) on the opposite lead-out side 2b, and this structure connects to the lead-out coil piece 45 located in the outermost insertion hole 66d of the slot 3c spaced by five slots in the circumferential direction. Note that the central coil piece 10 includes three types of pieces, namely, a piece that connects the starting slot insertion hole 66b and the slot insertion hole 66a on the side spaced by five slots in the circumferential direction, a piece that connects the starting slot insertion hole 66c and the slot insertion hole 66b on the side spaced by five slots in the circumferential direction, and a piece that connects the slot insertion hole 66d and the slot insertion hole 66c on the side spaced by five slots in the circumferential direction. For a part of the outer coil piece 30, a concentric coil is formed such that the innermost insertion hole 66a in which the lead-out coil piece 43 is positioned is connected via the inner coil piece 21 (see Fig. 3B) on the opposite lead-out side 2b, and this structure connects to the lead-out coil piece 46 located in the outermost insertion hole 66d of the slot 3c spaced by five slots in the circumferential direction.

Fig. 4F illustrates the shape of the lead-out coil piece 41. The shapes of the lead-out coil pieces 41 to 46 are completely identical, and a common component can be used. The lead-out coil piece 41 is formed by bending a nichrome wire having a rectangular cross-sectional shape into a crank shape, and includes a linear portion 41a, a bent portion 41b, and an extending portion 41c, such that the nichrome wire is stepped near the longitudinal center. As illustrated in Fig. 4B, the dimensional relationship is set so that, when mounted, the lead-out coil pieces 41 to 46 do not interfere with the respective coil pieces 10, 20, and 30.

By preparing the coil pieces 10, 20, and 30 illustrated in Fig. 4C, Fig. 4D, and Fig. 4E, such that each one has three types slightly different in size, and by preparing the lead-out coil pieces 41 to 46 having identical dimensions, a stator coil 9 for one phase is formed on the lead-out side 2a of the stator 2, as illustrated in Fig. 4A. The radially inner lead-out lines (41 - 43) of the stator coil 9 protrude inward beyond the innermost position of the stator core 3. In the present embodiment, a reason is that there is no margin on the inner side, however, when the design provides sufficient inner-side margin, the lead-out coil pieces 41 to 43 can be configured to be accommodated outside the inner diameter of the stator 2. In addition, the linear portions (10a, 10e, 20a, 20e, 30a, 30e, 41a, etc.) of the respective coil pieces are formed to be longer than the length of the lead-out side 2a of the stator core 3, and a dimensional relationship is set such that the end portions where the protrusions (10f, 10g, 20f, 20g, 30f, 30g, 41f, etc.) of the respective coil pieces are formed protrude into the stator core 3 on the opposite lead-out side 2b.

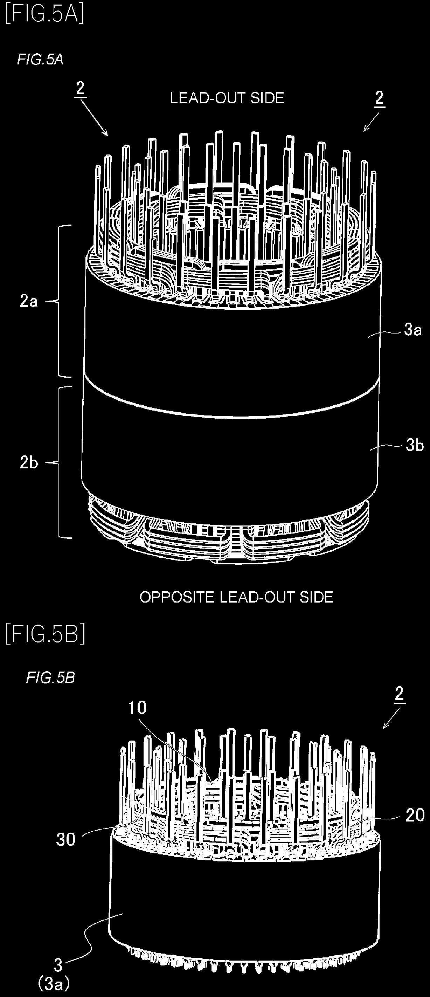

Fig. 5A is a perspective view of the stator 2 of the radial-gap-type rotary electric machine 1 according to an embodiment of the invention, and illustrates a state in which coils are fully mounted in the circumferential direction by concentric winding of rectangular conductors. Fig. 5B is a perspective view of a part of the stator 2 on the lead-out side 2a (before joining with a part of the opposite lead-out side 2b), and Fig. 2B is a perspective view of a part of the stator 2 on the opposite lead-out side 2b (before joining with a part of the lead-out side 2a), and illustrates a perspective view seen from the opposite side in the rotating axis direction (from a direction of an arrow 70 of Fig. 1). The stator on the lead-out side 2a and the stator on the opposite lead-out side 2b are assembled in the rotating axis direction, and in the bobbin 65 on the opposite lead-out side 2b, the recesses (10f, 10g, 20f, 20g, 30f, 30g, 41f, etc.) and the protrusions (11f, 11g, 21f, 21g, 31f, 31g) are subjected to concave-convex fit to form coils. In this instance, as illustrated in Fig. 1, in order to balance the resistance values of the coils, the inner coil piece 20 on the lead-out side 2a and the outer coil piece 31 on the opposite lead-out side 2b are combined in the axial direction to form concentric winding, and the outer coil piece 30 on the lead-out side 2a and the inner coil piece 21 on the opposite lead-out side 2b are combined in the axial direction to form concentric winding. Near the radial center, assembly is performed such that the central coil piece 10 on the lead-out side 2a and the central coil piece 11 on the opposite lead-out side 2b are combined to form concentric winding. Note that, when the lengths of the stator cores 3 on the lead-out side 2a and the opposite lead-out side in the rotating axis Ax direction are equal in a divided structure, the lengths of the linear portions 10a, 10e, 20a, 20e, 30a, and 30e of the respective coil pieces 10, 20, and 30 on the lead-out side 2a are formed to be longer than the lengths of the linear portions 11a, 11e, 21a, 21e, 31a, and 31e of the respective coil pieces 11, 21, and 31 on the opposite lead-out side 2b.

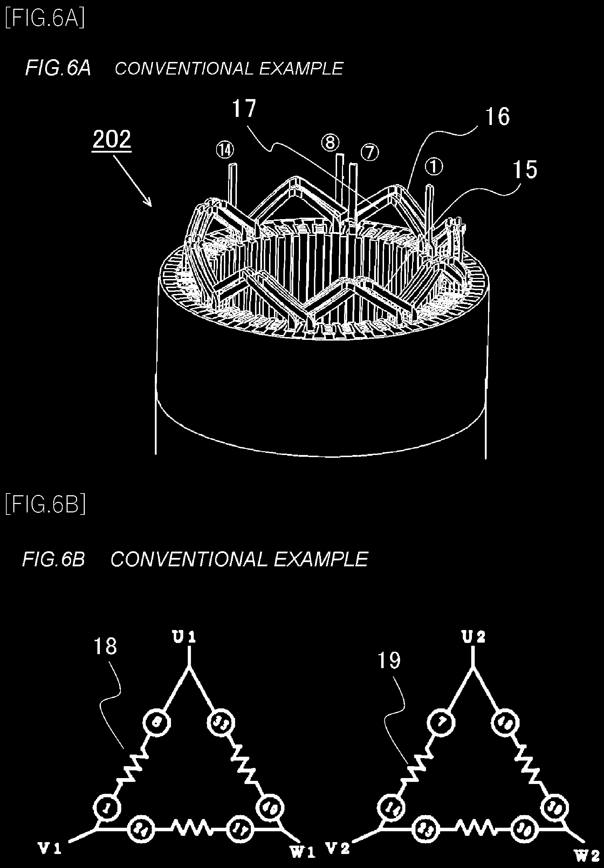

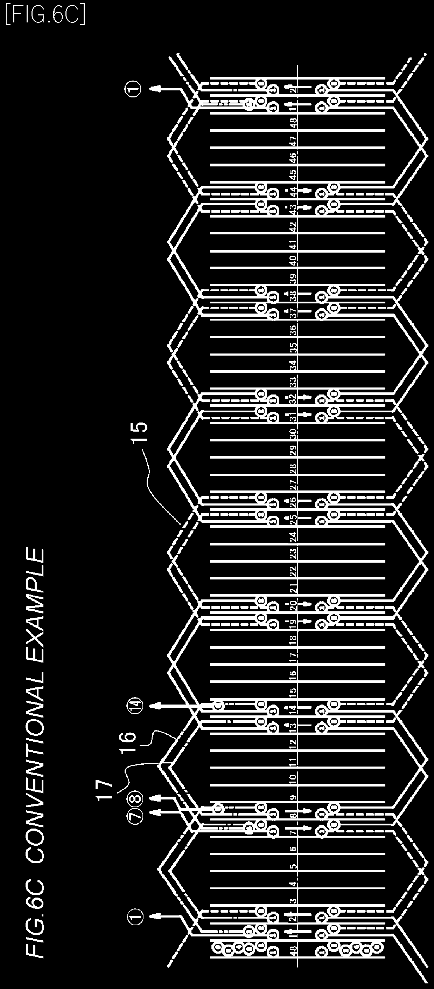

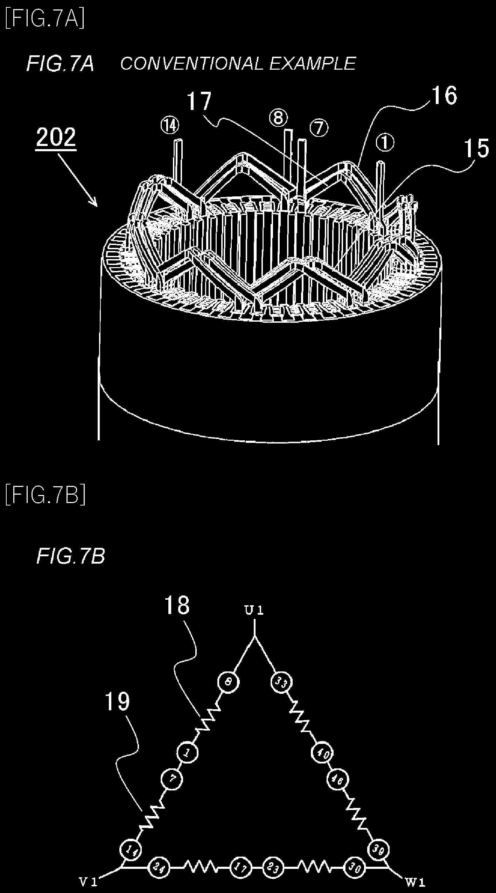

Next, a winding structure of the stator coil 9 according to the present embodiment will be described. Before describing the structure of the present embodiment, a conventional coil winding structure will be described with reference to Fig. 6A to Fig. 6C and Fig. 7A to Fig. 7C. Fig. 6A is a perspective view illustrating a one-phase configuration of a stator having a wave-winding structure using flat wires as a conventional example, Fig. 6B is a circuit diagram of a two-parallel delta connection, and Fig. 6C illustrates the corresponding connection diagram. Fig. 6A illustrates the upper half of Fig. 6C.

The small circled numbers, that is, circled 1 and circled 8, are lead-out wires. A coil entering from the inner lead-out wire circled 1 is connected, via a lower coil end, to the second insertion hole of slot number 43 located six slots ahead in the circumferential direction, and via an upper coil end, to slot number 37 located six slots ahead in the circumferential direction, and then, via a lower coil end, passes through slot number 31, slot number 25, slot number 19, and slot number 13, and is connected to slot number 8 spaced by five slots in the circumferential direction by a short-pitch coil 17. Thereafter, one full turn is made through slot numbers 2, 44, 38, 26, 20, and 14 by coils spanning six slots. Thereafter, it is connected by a long-pitch coil 16 and moves to the third insertion hole, and starting from slot number 1, it makes two turns in the same manner as described above, and a lead-out wire is drawn out from the fourth insertion hole of slot number 8. This constitutes the U-phase of system 1 having circled 1 and circled 8 as terminals, and is connected as the U-phase coil 18 of system 1 of Fig. 6B. Similarly, a U-phase coil that enters from circled 14 and is connected to circled 7 is configured as system 2, and this is connected as the U-phase coil 19 of system 2 of Fig. 6B. As can be understood from this, in wave winding, since divided coil pieces are connected in the circumferential direction, the number of coils cannot be increased beyond the number of slots per pole per phase, and in the case of eight poles and 48 slots, the number of coils per phase becomes two.

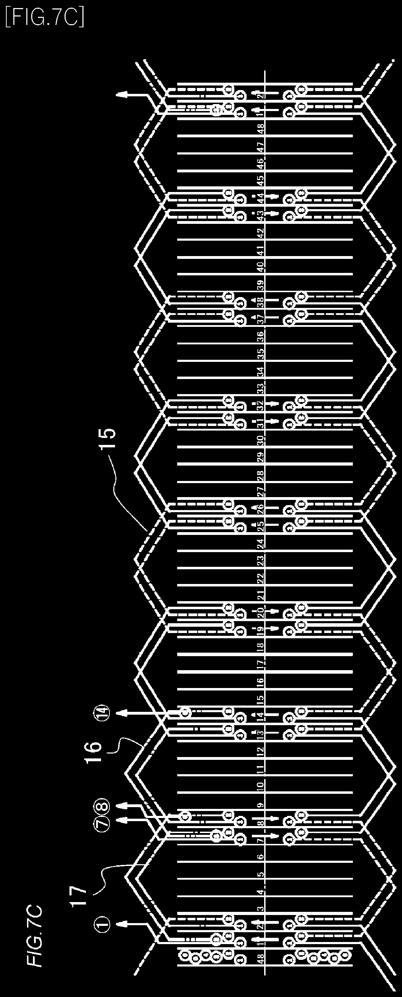

Fig. 7A is a perspective view illustrating a one-phase configuration of a stator having a wave-winding structure using flat wires as another conventional example, Fig. 7B is a circuit diagram of a two-series delta connection, and Fig. 7C illustrates the corresponding connection diagram. In the wave winding illustrated in Fig. 6A, since the number of coils is two, in addition to the two-delta connection illustrated in Fig. 6, it is also possible to configure a one-delta connection in which two coils of the same phase are connected in series. That is, as illustrated in Fig. 7B, this configuration can be realized by connecting in series the two U-phase coils, namely, a circled 1-circled 8 coil and a circled 14-circled 7 coil, and similarly connecting the two coils of the same phase in series for the other phases, and then forming a delta connection. With this configuration, a plurality of voltage specifications, for example, 200 V and 400 V rotary electric machines, can be realized with the same winding configuration simply by changing the connection. In addition, although not illustrated, another configuration using a Y connection is possible, and a two-series one-Y connection and a two-Y parallel connection can be configured. However, since the number of turns cannot be changed, the factor of voltage change is 1.73.

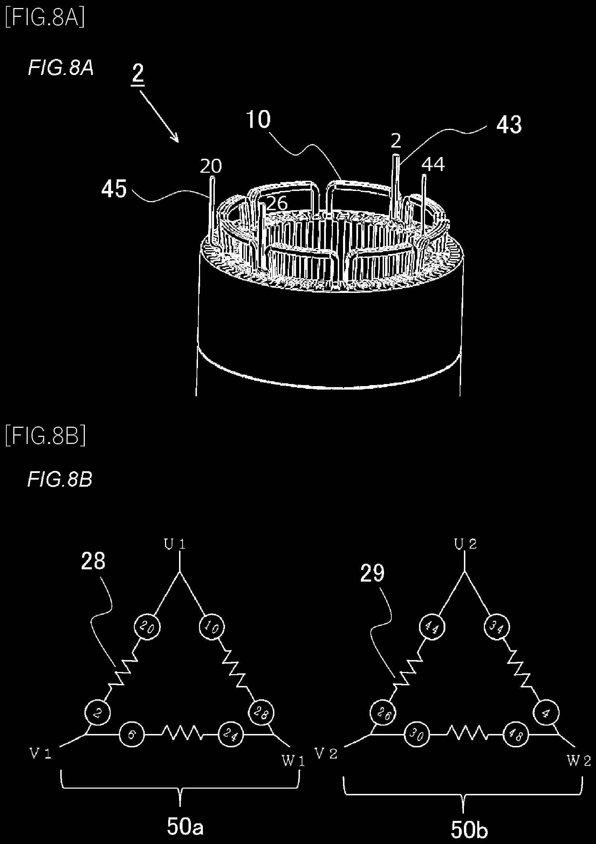

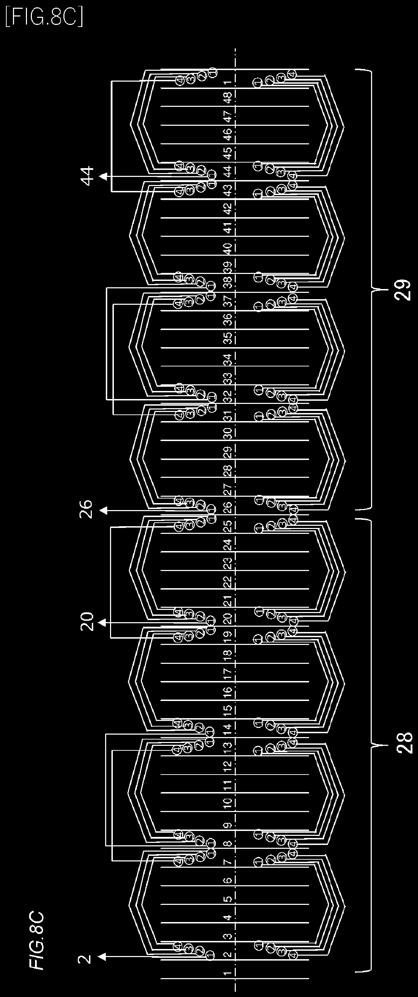

Next, the winding structure of the stator coil 9 according to the present embodiment will be described. Fig. 8A is a perspective view illustrating a one-phase configuration of a stator having a concentric-winding structure using flat wires according to the invention, Fig. 8B is a circuit diagram of a two-parallel delta connection, and Fig. 8C illustrates the corresponding connection diagram. In Fig. 8A to Fig. 8C, only the U-phase coils are illustrated. By comparing Fig. 8C with Fig. 6C, it can be understood that U-phase coils are arranged in the same slots. In the present embodiment, since a concentric-winding structure is employed, the configuration includes eight partial coils with five slots (37.5 degrees across) (coils in slot numbers 2 and 7, coils 8 and 13, coils 14 and 19, coils 20 and 25, coils 26 and 31, coils 32 and 37, coils 38 and 43, and coils 44 and 1). In Fig. 8C, the concentric partial coils are connected such that four partial coils are connected in series, thereby forming a partial coil group 28 of system 1 and a partial coil group 29 of system 2. By connecting the partial coil group 28 of system 1 to the U-phase coil portion of Fig. 8B to form a stator coil 50a, and connecting the partial coil group 29 of system 2 to the other delta-connected U-phase portion to form a stator coil 50b, the coil configuration illustrated in the circuit diagram of Fig. 8B is obtained.

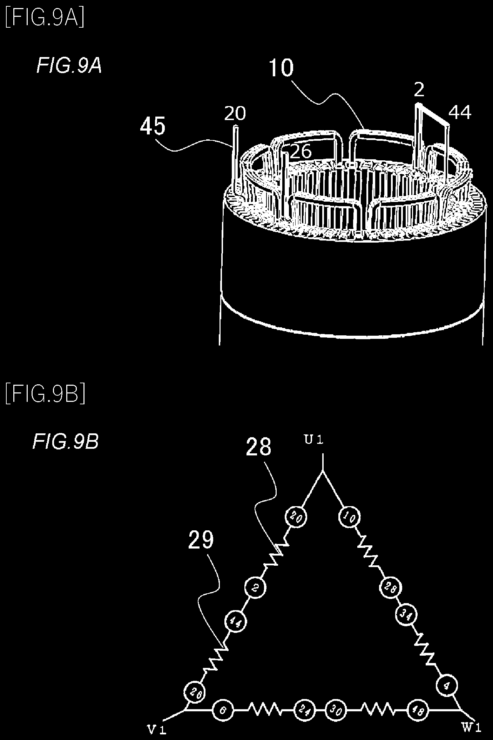

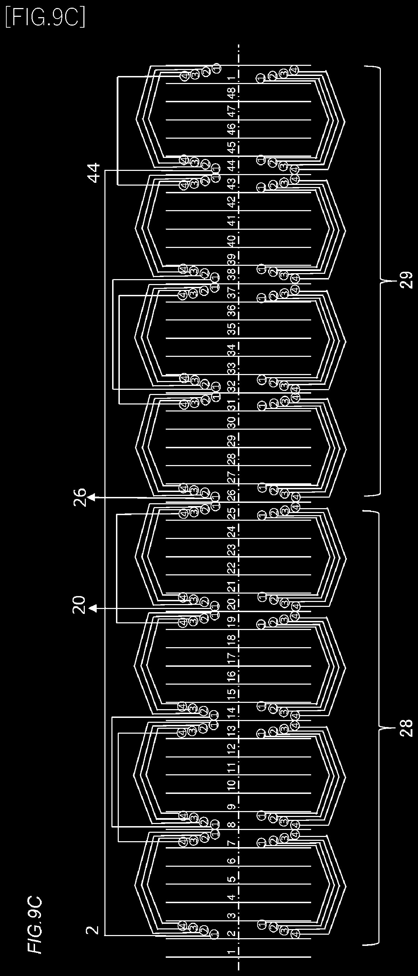

Fig. 9A is a perspective view illustrating another one-phase configuration of the stator 2 having a concentric-winding structure using flat wires according to the invention, Fig. 9B is a circuit diagram of a two-series delta connection, and Fig. 9C illustrates the corresponding connection diagram. Similar to the conventional example of Fig. 7A, since two coil groups 28 and 29 can be configured in the concentric-winding structure, these two coil groups can be connected in series to correspond to a one-delta connection as illustrated in Fig. 9B. As a result, a motor configuration compatible with two specifications, 200 V and 400 V, can be realized.

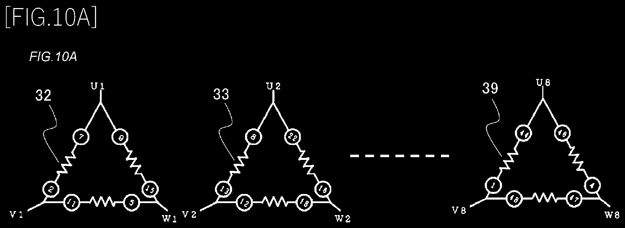

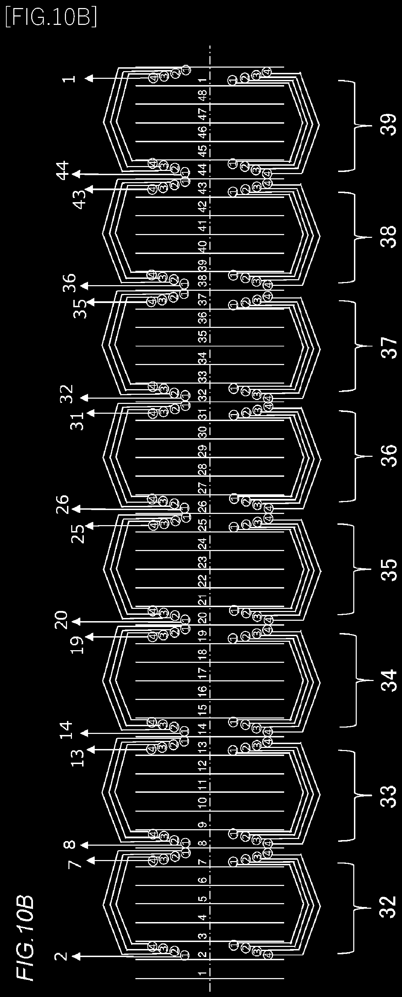

Fig. 10A is a circuit diagram of an eight-parallel delta connection illustrating another one-phase configuration of the stator 2 having a concentric-winding structure using flat wires according to the invention, and Fig. 10B illustrates the corresponding connection diagram. As illustrated in Fig. 10B, in the case of concentric winding, the present embodiment includes eight coils 32 to 39. For this reason, connection configurations up to eight parallel connections are possible. Fig. 10A and Fig. 10B illustrate an eight-parallel delta connection configuration in which all coils are connected in parallel. However, as illustrated in Fig. 10B, by defining one concentric winding unit as coils 32 to 39, eight-parallelization can be achieved. Naturally, a two-series four-parallel configuration is also possible. In this way, compatibility with four voltage specifications can be achieved.

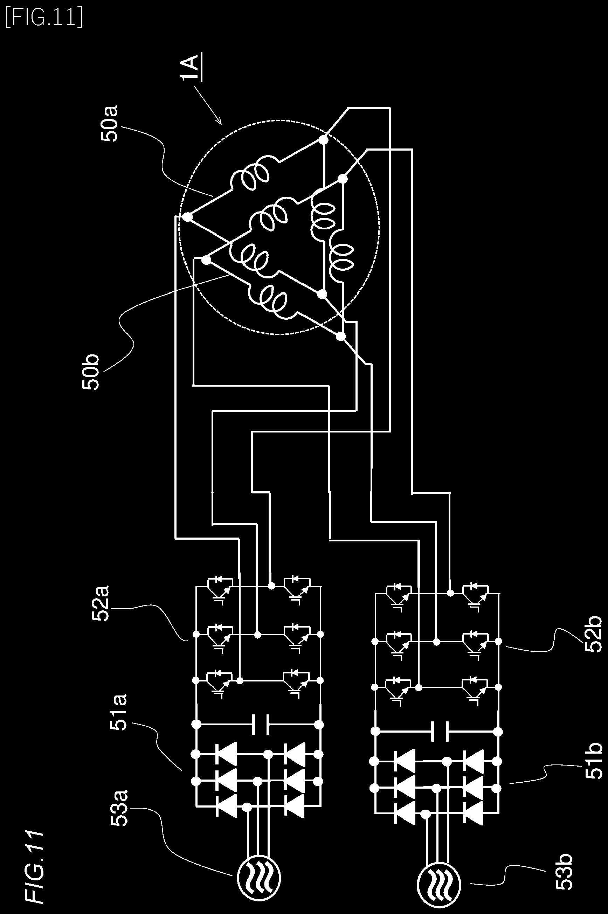

Fig. 11 is a circuit configuration diagram of a control system for a rotary electric machine in which a concentric-winding stator 2 is driven by two inverter devices. In a large-capacity rotary electric machine 1A, rather than increasing the capacity of a drive circuit (inverter device) for driving to drive one rotary electric machine using the one drive circuit, dividing the drive circuit into two units reduces circuit manufacturing cost in some cases. In addition, a plurality of control circuits is used to distribute heat generated in a power device part of the drive circuit in some cases. In this instance, a method is adopted in which the windings are divided into two groups and shared by the respective drive circuits (inverter devices).

Fig. 11 illustrates this connection configuration, in which a control circuit 52a of system 1 is connected to a stator coil 50a of system 1, and a control circuit 52b of system 2 is connected to a stator coil 50b of system 2 to perform driving. The power supplies of the control circuits 52a and 52b are connected to separate systems, and separate rectifier circuits 51a and 51b generate different direct currents to perform PWM (Pulse Width Modulation) switching, thereby driving the rotary electric machine. Although not illustrated in Fig. 11, a drive device having a microcontroller is provided to control on/off of gate signals of the control circuits 52a and 52b. When such a configuration is adopted, it can be understood that the windings of the rotary electric machine 1 need to be provided in two or more groups, such as 50a and 50b. In the wave-winding examples illustrated in Fig. 6A and Fig. 7A, the windings of the same phase can only be divided into two groups. Therefore, even though switching between 200 V and 400 V specifications is possible, a drive method using two control circuits cannot be employed in the 400 V specification (two-series one-delta connection). In other words, in order to realize both voltage specification switching and driving by two control circuits with the rotary electric machine 1 of a single winding specification, four or more coils per phase are required. With the concentric-winding structure of the invention, the windings can be divided into up to eight coils, making this possible.

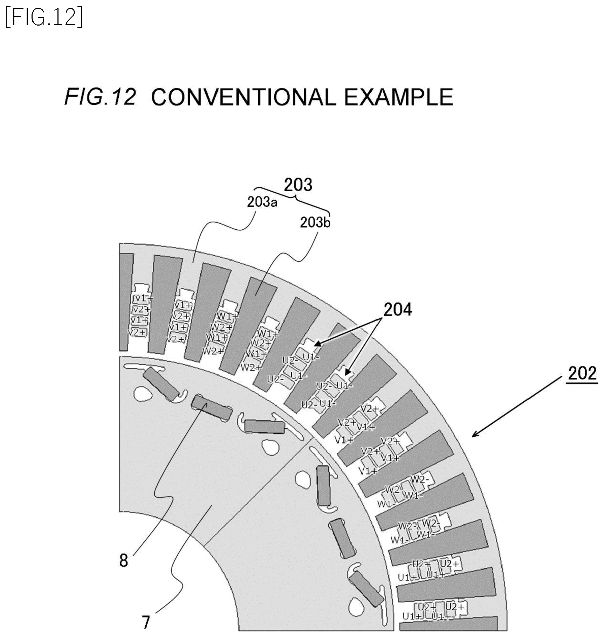

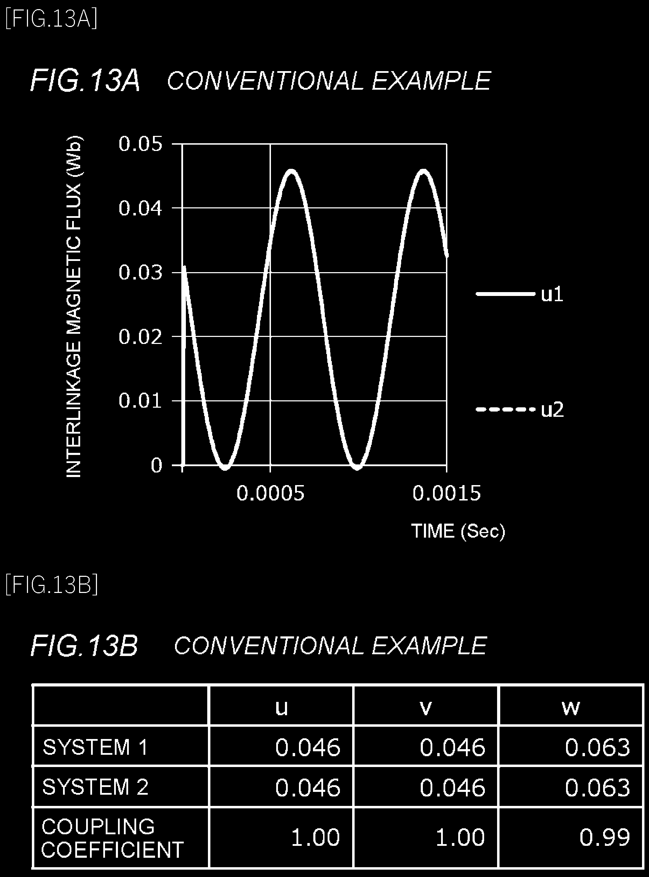

Fig. 12 illustrates a coil slot arrangement model of a stator 202 having a wave-winding structure using flat wires, and Fig. 13A and Fig. 13B illustrate results of interlinkage magnetic flux calculations obtained by magnetic field analysis using this model. When two coil groups are driven using two control circuits as illustrated in Fig. 11, magnetic interference between the coils can become an issue in some cases. When a coupling coefficient between the two coils is high, if operations of one control circuit and the other control circuit are not synchronized, an induced voltage is generated between the coils, causing a phenomenon in which currents distort each other. Fig. 13A illustrates results confirming this phenomenon by magnetic field analysis. Fig. 13A illustrates the slot arrangement in the case of wave winding. As indicated by slots 204, coils U1 and U2 of system 1 are alternately mixed in a single slot 204. This is similarly applied to other phases. In a single slot, V1 and V2 of system 1 are alternately mixed, and W1 and W2 of system 1 are alternately mixed.

Fig. 13A illustrates results of interlinkage magnetic flux generated in the other coil (system 2) when a sine wave is applied to one of the coils (system 1). In Fig. 13A, a horizontal axis represents time (unit: seconds) and a vertical axis represents interlinkage magnetic flux (Wb). Even though analysis is performed for three-phase AC, only the U-phase is illustrated here. The magnetic flux of u1 on the side to which current is applied is illustrated by a solid line, and the magnetic flux of u2 on the side where interlinkage magnetic flux is detected is illustrated by a dotted line. Since the two lines coincide exactly, the graph appears as a single solid line. Fig. 13B illustrates interlinkage magnetic fluxes and coupling coefficients for three phases. The coupling coefficient is 1 for all three phases, confirming a high degree of magnetic influence. This means that, for wave-winding coil structures, driving with two control circuits is not suitable.

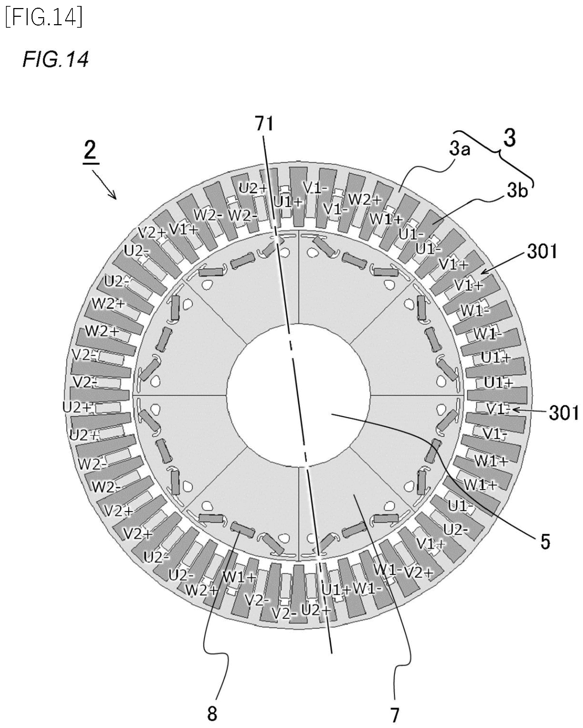

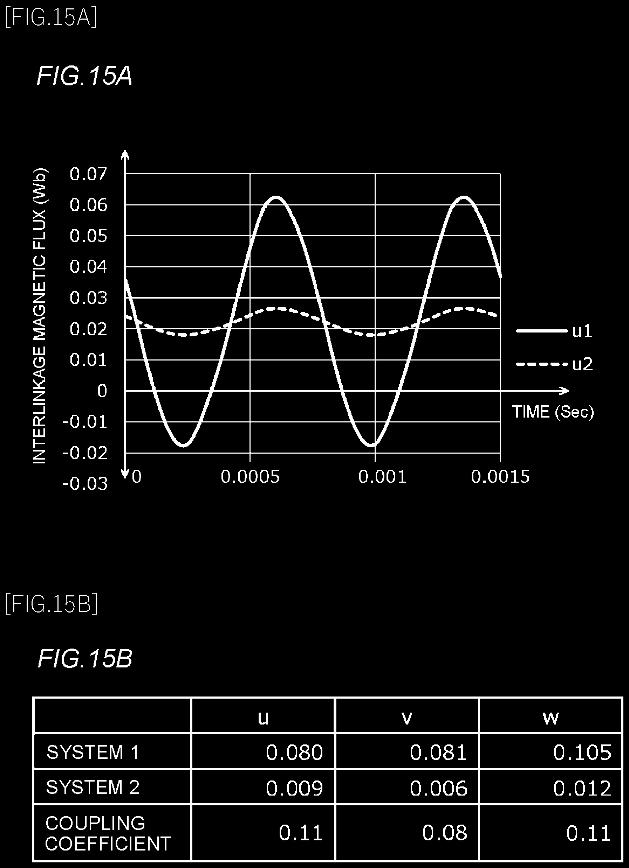

Fig. 14 illustrates a coil slot arrangement model of the stator 2 having a concentric-winding structure using flat wires according to the present embodiment. In the calculation model for concentric winding, only coils of the same system are placed within the same slot. For example, only a V1-phase coil is arranged in slot 301. This circuit corresponds to the two-parallel delta connection illustrated in Fig. 8. A dashed line designated by reference numeral 71 indicates a boundary between a U1 coil and a U2 coil. Fig. 15B illustrates calculation results with regard to interference of interlinkage magnetic flux between coils obtained by magnetic field analysis using this model. In the case of concentric-winding, four coils are configured for each one in the circumferential direction, and thus influence is considered small for coils other than those near the boundary. Comparing u1 and u2, unlike the result where u1 and u2 coincide with each other of Fig. 13A, Fig. 15A illustrates a result that the interlinkage magnetic flux of coil u2 is smaller than that of coil u1, and as illustrated in Fig. 15B, the coupling coefficient is approximately 0.1, indicating that magnetic interference is small.

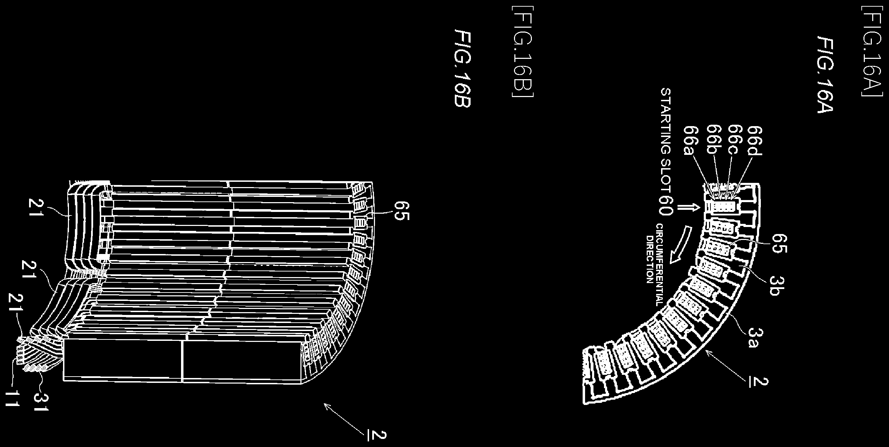

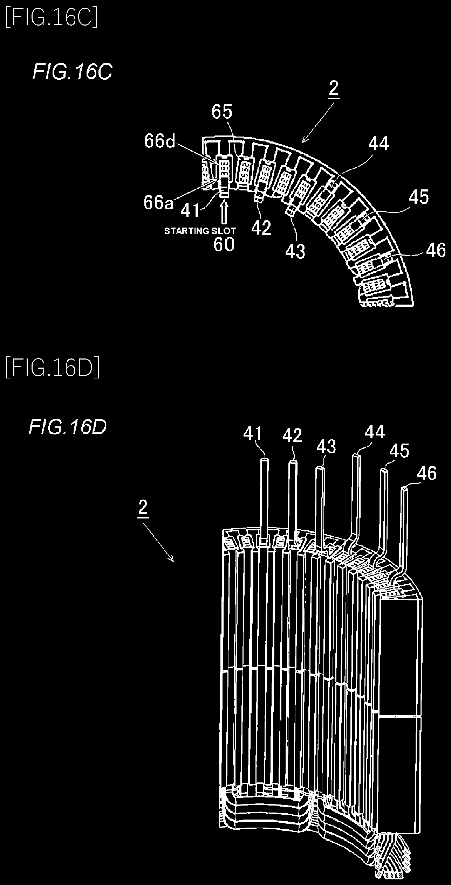

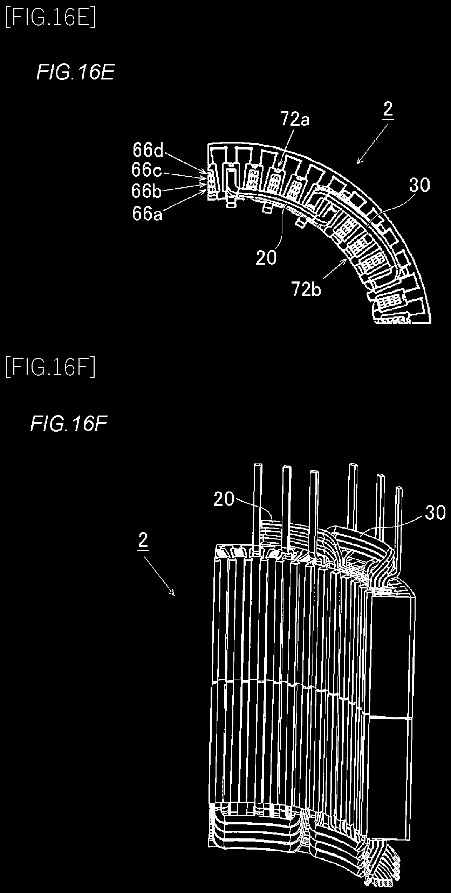

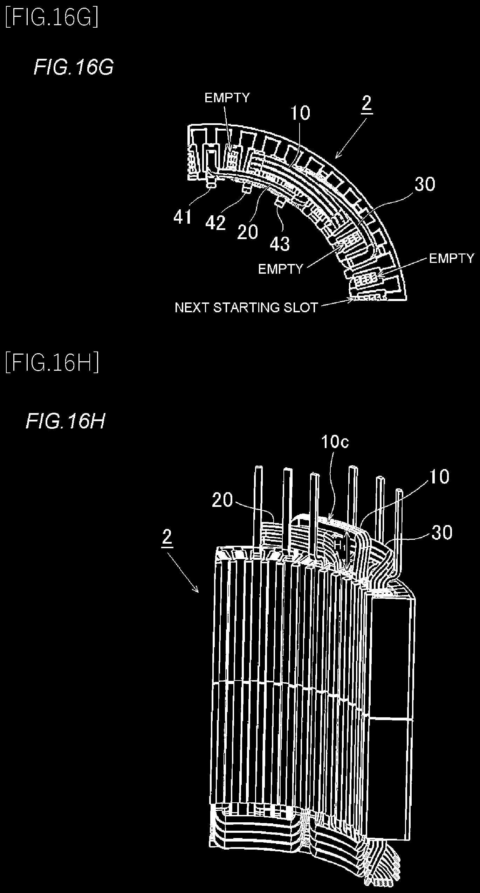

Next, an assembly sequence of the concentric-winding stator 2 according to the present embodiment will be described with reference to Fig. 16A to Fig. 16H. Fig. 16A, Fig. 16C, Fig. 16E, and Fig. 16G are projection views of the stator 2 on the insertion/assembly side (lead-out side), and Fig. 16B, Fig. 16D, Fig. 16F, and Fig. 16H are perspective views (for one phase) of the stator 2 in the states illustrated in Fig. 16A, Fig. 16C, Fig. 16E, and Fig. 16G, respectively.

Fig. 16A illustrates a stator core 3 in an assembled state. From this state, coil pieces are inserted into insertion holes 66a to 66d of the bobbin 65 in the slots 3c while considering the assembly sequence. Fig. 16B is a perspective view of the stator 2 in the state illustrated in Fig. 16A. Fig. 16B illustrates a state in which assembly of the coil pieces 11, 21, and 31 on the opposite lead-out side has already been completed.

Fig. 16C illustrates a state in which lead-out coil pieces 41 to 43 are inserted into the inner circumferential insertion holes 66a and lead-out coil pieces 44 to 46 are inserted into the outer circumferential insertion holes 66d from the state illustrated in Fig. 16A. Fig. 16D is a perspective view of the stator 2 in the state of Fig. 16C. In Fig. 16C and Fig. 16D, the lead-out coil pieces 41 to 43 are repeatedly inserted into a starting slot 60 and the slot one slot away thereafter, so that lead-out coil pieces 41 to 43 are inserted for one full circumferential round. The outer lead-out coil pieces 44 to 46 are inserted for one full circumferential round starting from a position five slots away from the starting slot 60. Note that the insertion order of the lead-out coil pieces 41 to 46 is arbitrary. That is, lead-out wires 41 to 43 are inserted into the inner insertion holes 66a in every other slot in the circumferential direction, and lead-out wires 44 to 46 are inserted into the outer insertion holes 66d in every other slot in the circumferential direction, either sequentially or in any order. From the projection view of Fig. 16C, it can be understood that even after inserting the lead-out coil pieces 41 and 42, the insertion holes other than those receiving the lead-out coil pieces 41 and 42 remain visible in the projection view. In the same manner, lead-out coil pieces 41 to 46 are inserted into the inner insertion holes 66a for the other phases in every other slot in the circumferential direction, and lead-out coil pieces 44 to 46 are inserted into the outer insertion holes 66d in the same manner.

In Fig. 16E, three inner coil pieces 20 and three outer coil pieces 30 are inserted. The inner coil pieces 20 are inserted into the second insertion hole 66b from the inner side of the starting slot 60 and into the insertion hole 66b located five slots away from the starting slot 60 in the circumferential direction. Then, coil pieces 20 are similarly inserted into the insertion hole 66c located further outward, and further into the insertion hole 66d located even further outward. In this manner, the inner coil pieces 20 are inserted sequentially from the second insertion hole 66b on the inner side toward the fourth insertion hole 66d. As a result, the connecting portion 20c of the coil piece 20 inserted into the insertion hole 66d is positioned at the highest level, and the connecting portion 20c of the coil piece 20 inserted into the insertion hole 66b is positioned at the lowest level, forming a stacked structure. The above-described insertion of three coil pieces 20, that is, an operation of inserting three coil pieces 20 starting from a position 10 slots away from a start point 60 in the circumferential direction, is repeated six times (six layers) around the entire circumference.

First, the outer coil pieces 30 are inserted into the third insertion hole 66c from the inner side of the slot located four slots away from the starting slot 60 in the circumferential direction, and into the insertion hole 66c of the slot located nine slots away from the starting slot 60 in the circumferential direction. The outer coil pieces 30 need to be sequentially inserted inward from the third insertion hole on the outer side. First, lead-out coil pieces 44 and 46 are inserted into the fourth insertion hole on the outer side, then a coil piece 30 is inserted into the third insertion hole, then a coil piece 30 is inserted into the second insertion hole, and finally a coil piece 30 is inserted into the first insertion hole. In this instance, coil-end portions are sequentially stacked from the lowest one by stacking the coil-end portions such that bent portions 46b of the lead-out coil pieces 44 and 46 are positioned close to the stator core 3, the connecting portion 30c of the coil piece 30 inserted into the third insertion hole is positioned next in the rotating axis direction, the connecting portion 30c of the coil piece 30 inserted into the second insertion hole is positioned further next, and the connecting portion 30c of the coil piece 30 inserted into the first insertion hole is positioned farthest from the stator core 3. As illustrated in the projection view of Fig. 16E, even after inserting the coil pieces 20 and 30, the insertion holes 66a to 66d designated by arrows 72a and 72b for inserting the central coil pieces remain visible when viewed from the rotating axis direction.

Next, as illustrated in Fig. 16G and Fig. 16H, three central coil pieces 10 are inserted at each of positions designated by arrows 72a and 72b in Fig. 16E. The central coil pieces 10 are first inserted into the outermost insertion hole 66d of the slot two slots away from the starting slot 60 in the circumferential direction, and into the third insertion hole 66c from the inner side of the slot seven slots away from the starting slot 60 in the circumferential direction. Thereafter, the coil pieces are inserted into the third insertion hole 66c from the inner side of the slot two slots away from the starting slot 60 and into the second insertion hole 66b from the inner side of the slot seven slots away from the starting slot 60. Finally, the coil pieces are inserted into the second insertion hole 66b from the inner side of the slot two slots away from the starting slot 60 in the circumferential direction and into the innermost insertion hole 66a of the slot seven slots away from the starting slot 60 in the circumferential direction. In this embodiment, since the coil-end portions of the coil pieces 10 are tilted outward by approximately 5 degrees as indicated by angle θ₁ of Fig. 4C, it is preferable to insert the coil pieces 10 sequentially from the outer insertion hole 4. In addition, the connecting portions 10c of the three inserted types of coil pieces 10 are arranged radially at the same height H₁ with respect to the axial direction.

Such insertion of three central coil pieces 10 is repeated six times (for six layers) over the entire circumferential direction, using positions ten slots away from the starting slot 60 as new starting points. In this manner, assembly of the stator coil 9 on the lead-out side is completed, resulting in the state illustrated in Fig. 5B.

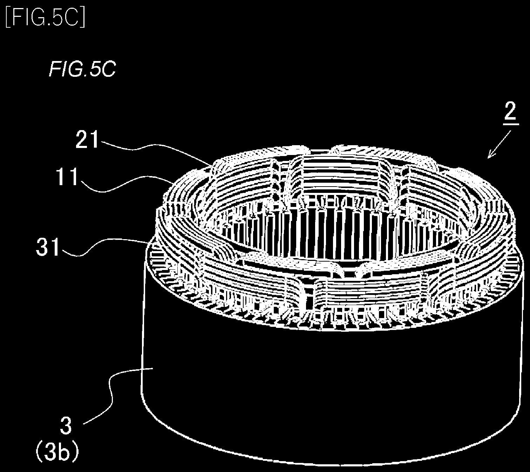

An assembly sequence for coil pieces 11, 21, and 31 on the opposite lead-out side of the stator core 3 is basically the same as the assembly methods illustrated in Fig. 16E and Fig. 16G. On the opposite lead-out side 2b, since lead-out wires corresponding to reference numerals 41 to 46 are not used, four coil pieces 11, 21, and 31 are inserted for each type. First, inner coil pieces 21 are sequentially inserted into insertion holes 1 to 4 in the slots 3c, and this operation is repeated for eight phases in the circumferential direction. Next, outer coil pieces 31 are sequentially inserted into insertion holes 4 to 1 in the slots 3c, and this operation is repeated for eight phases in the circumferential direction. Next, central coil pieces 11 are sequentially inserted from insertion hole 4 to insertion hole 1, and this operation is repeated for eight phases in the circumferential direction, thereby completing assembly of the coil pieces on the opposite lead-out side 2b of the coil pieces. This completed state is illustrated in Fig. 5C. Note that the insertion order of these coil pieces does not necessarily have to follow the above description. For example, the assembly order of the inner coil pieces 20 and the outer coil pieces 30 can be reversed, such that the outer coil pieces 30 are assembled first, followed by assembly of the inner coil pieces 20.

While the stator core 3 on the lead-out side 2a assembled as illustrated in Fig. 5B and the stator core 3 on the opposite lead-out side 2b assembled as illustrated in Fig. 5C are temporarily fixed so that a coil-end part of each coil piece does not move in the rotating axis direction, the stator core parts on the lead-out side 2a and the opposite lead-out side 2b are joined. In this way, the protrusions of the coil pieces 10, 20, 30, and 41 to 46 are fit with the recesses of the coil pieces 11, 21, and 31. Through this procedure, mechanical assembly of the stator 2 is completed.

In the conventional wave-winding coil pieces, as can be understood from Fig. 6A, adjacent coil pieces cross and intertwine with each other, making it impossible to assemble the coil pieces sequentially one by one, and the coil pieces need to be collectively fixed and then collectively installed into the slots 3c before inserting the bobbin into stator core. Moreover, once assembled, it is difficult to remove the coil pieces one by one. In the concentric-winding concave-convex fitting coil pieces 10, 11, 20, 21, 30, and 31 of the concentric-winding configurations according to the present embodiment also provide advantages over wave winding in terms of ease of coil assembly and wave-winding.

As described above, according to the invention, by combining the outer coil pieces 30 and 31, which have longer coil-end portions, with the inner coil pieces 20 and 21, respectively, the central coil pieces 10 and 11, which are connected in the circumferential direction at the same radial position as that of the slots, are designed so that circumferential lengths thereof, that is, resistance values thereof, are equal to those of coils formed by connecting inner coil pieces and outer coil pieces. As a result, with a concentric-winding structure formed using rectangular conductors, the resistance and inductance of the coils can be equalized.

With the coil configuration of the invention, a concentric-winding stator coil 9 having a high conductor space factor and small inter-phase coil resistance variation can be configured. In this way, it is possible to perform motor designs and system designs that take advantage of the characteristics of concentric-winding coil configurations. In addition, since the number of coils is not limited by the number of slots per pole per phase, design freedom is increased when selecting series or parallel circuits during wiring, facilitating design changes for different voltage specifications and different frequencies (rotational speed and torque). In concentric winding, the number of turns per slot can be designed as an odd number, which cannot be achieved by wave winding, and thus it is possible to further increase design flexibility for accommodating specification changes. Furthermore, since the coils have a structure independent between systems, magnetic interference can be reduced, resulting in fewer restrictions on the number of drive circuits used. In addition, during concave-convex fitting assembly of the stator coils, by setting an appropriate coil insertion order, assembly can be performed while carrying out concave-convex fitting simultaneously with insertion. Note that the invention is not limited to the above embodiments, and various modifications can be made without departing from the spirit of the invention.

### REFERENCE SIGNS LIST

1, 1A Rotary electric machine
2 Stator
2a lead-out side
2b opposite lead-out side
3 stator core
3a core-back core
3b tooth core
3c slot
3d recess
4 housing
4a body portion
4b, 4c rear end bracket
5 rotating shaft
6 rotor
7 rotor core
8 permanent magnet
9 stator coil
10, 11 central coil piece
11a, 11e linear portion
11b, 11d extending portion
11c connecting portion
15 standard-pitch coil
16 long-pitch coil
17 short-pitch coil
18 U-phase coil of system 1
19 U-phase coil of system 2
20, 21 inner coil piece
28 (first) partial coil group
29 (second) partial coil group
30, 31 outer coil piece
32 to 39 (first to eighth) concentric-winding coil groups
41 to 46 lead-out coil piece
50a winding (of system 1)
50b winding (of system 2)
51 rectifier (converter)
52a, 52b control circuit (inverter device)
53a, 53b system power supply (three-phase)
65 resin bobbin
66a to 66d insertion hole
67, 68 flange portion
67a, 68a claw portion
100 air compressor
101 air end
102 casing
105 first shaft
110 first bevel gear
120 M-rotor
130 second bevel gear
135 second shaft
140 F-rotor
145 tooth space
202 stator
Ax rotating axis

## Claims

1. A rotary electric machine comprising:
a rotor fixed to a rotating shaft; and
a stator in which coils are formed by inserting and connecting a plurality of U-shaped coil pieces made of flat conductors into slots from one side or the other side in a rotating shaft direction of a stator core, a plurality of slots accommodating a plurality of flat wires in a circumferential direction being formed in said stator core, wherein:
said coil pieces are formed of flat wires and include two linear portions that are parts accommodated in said slots spaced apart in the circumferential direction, and a coil-end portion formed to extend outward in the rotating axis direction from said linear portions and to connect said two linear portions,
said coil pieces include
a central coil piece in which said linear portions and said coil-end portion are arranged on a circumference in a plan view as seen from the rotating shaft direction,
an inner coil piece in which said coil-end portion is bent radially inward relative to parts accommodated in said slots, and
an outer coil piece in which said coil-end portion is bent radially outward relative to the parts accommodated in said slots,
relative to a circumferential length of the coil-end portion of said central coil piece, the circumferential length of the coil-end portion of said inner coil piece is shorter, and the circumferential length of the coil-end portion of said outer coil piece is longer,
a pair of said central coil pieces is inserted into and connected to a first slot group from one side or the other side in the rotating shaft direction, and
said inner coil piece and said outer coil piece are inserted into and electrically connected to a second slot group or a third slot group from one side or the other side in the rotating shaft direction, thereby forming a concentric-winding stator coil.

2. The rotary electric machine according to claim 1, wherein:
said coil-end portion is formed by two extending portions that extend outward in the rotating axis direction from said linear portions of said coil piece, and a connecting portion that circumferentially connects end portions of said extending portions,
after said stator coil is connected, connecting portions of said central coil pieces are arranged to be aligned in a radial direction,
by providing an angle such that the extending portions of said inner coil piece are bent radially inward, the connecting portions of said inner coil piece are arranged to be stacked in the rotating shaft direction at a radially inner part than a stacked part of said central coil pieces, and
by providing an angle such that the extending portions of said outer coil piece are bent radially outward, a connecting portion of said outer coil piece is arranged to be stacked in the rotating shaft direction at a radially outer part than a stacked portion of the connecting portions of said central coil pieces.

3. The rotary electric machine according to claim 2, wherein:
an inward bending angle of said extending portion with respect to the linear portion of said inner coil piece is greater than 0 degrees and less than or equal to 45 degrees,
an outward bending angle of said extending portion with respect to the linear portion of said outer coil piece is greater than 0 degrees and less than or equal to 45 degrees, and
one turn of coil length formed by alternately connecting said inner coil piece and said outer coil piece is set to be equal to one turn of coil length formed by said two central coil pieces.

4. The rotary electric machine according to claim 3, wherein, when inserting said coil pieces into said slots of said stator core from both sides in the rotating shaft direction, said central coil piece, said inner coil piece, and said outer coil piece are allowed to be inserted and assembled one by one in sequence in parallel with the rotating shaft direction.

5. The rotary electric machine according to claim 1, wherein, forming said stator coil by concentric winding allows a configuration of a parallel number greater than a number of slots per pole per phase.

6. The rotary electric machine according to claim 3, wherein:
said stator core includes a core-back core and a plurality of tooth cores combined with said core-back core, and
a low-loss soft magnetic material is used for said tooth cores, and resin bobbins configured to accommodate a plurality of flat wires in a radial direction are respectively arranged in said slots between adjacent said tooth cores.

7. The rotary electric machine according to claim 3, wherein the rotary electric machine is configured to simultaneously support a plurality of voltage specifications and a plurality of control devices using a single winding specification.

8. The rotary electric machine according to claim 3, wherein an odd number of turns is formed in one slot.

9. A control system of the rotary electric machine according to claim 3, wherein:
said stator coil has a parallel delta winding configuration,
each of a plurality of inverter devices is connected to each delta winding part, and
said inverter devices independently supply excitation voltages to said delta winding parts.

10. The control system of the rotary electric machine according to claim 9, wherein converter circuits corresponding to said respective inverter devices are provided, and electric power is supplied to said converter circuits from independent system power sources.

11. A method of manufacturing a stator in a rotary electric machine, the rotary electric machine including a rotor fixed to a rotating shaft, and a stator arranged on an outer circumferential side and including a stator core in which a plurality of slots is formed in a circumferential direction, and a stator coil formed of a plurality of U-shaped coil pieces made of flat wires inserted into said slots from a lead-out side or an opposite lead-out side in a rotating shaft direction, a bobbin having slot holes for accommodating m flat wires in a radial direction being disposed in each of said slots, the method comprising:
as said coil pieces inserted from the lead-out side in the rotating shaft direction,
a) preparing, as a group of said coil pieces each formed by two linear portions accommodated in said slot holes spaced apart by five slots in the circumferential direction, and a coil-end portion formed to extend outward in the rotating axis direction from said linear portions and to extend in the rotating shaft direction and the circumferential direction to interconnect said two linear portions, m-1 types of central coil pieces, m-1 types of outer coil pieces in which coil-end portions are bent to be curved outward in the radial direction, and m-1 types of inner coil pieces in which coil-end portions are bent to be curved inward in the radial direction;
(b) arranging the m-1 types of inner coil pieces over an entire circumference in the circumferential direction from a slot hole serving as a start point of said inner coil pieces so that the connecting portions extending in the circumferential direction of said coil-end portions are stacked in the radial direction;
(c) arranging the m-1 types of outer coil pieces over the entire circumference in the circumferential direction from a slot hole at a position spaced four slots away from the start point of said inner coil pieces in the circumferential direction so that the connecting portions extending in the circumferential direction of said coil-end portions are stacked in the rotating axis direction;
(d) arranging the m-1 types of central coil pieces over the entire circumference in the circumferential direction from a position located two slots away from the start point in the circumferential direction so that connecting portions of said coil-end portions extending in the circumferential direction are aligned in the radial direction;
as said coil pieces inserted from the opposite lead-out side in the rotating shaft direction,
(e) preparing, as a group of said coil pieces each formed by two linear portions accommodated in said slot holes spaced apart by five slots in the circumferential direction, and a coil-end portion formed to extend outward in the rotating axis direction from said linear portions and to extend in the rotating shaft direction and the circumferential direction to interconnect the two linear portions, m types of central coil pieces, m types of outer coil pieces in which coil-end portions are bent to be curved outward in the radial direction, and m types of inner coil pieces in which coil-end portions are bent to be curved inward in the radial direction;
f) arranging the m-1 types of inner coil pieces over the entire circumference in the circumferential direction from a slot hole serving as a start point of said inner coil pieces so that the connecting portions extending in the circumferential direction of said coil-end portions are stacked in the radial direction;
g) arranging the m-1 types of outer coil pieces over the entire circumference in the circumferential direction from a slot hole at a position spaced four slots away from the start point of said inner coil pieces in the circumferential direction so that the connecting portions extending in the circumferential direction of said coil-end portions are stacked in the rotating axis direction; and
h) arranging the m-1 types of central coil pieces over the entire circumference in the circumferential direction from a position located two slots away from the start point in the circumferential direction so that connecting portions of said coil-end portions extending in the circumferential direction are aligned in the radial direction,
wherein a concentric-winding coil is formed by connecting, in said slot holes, a group of coil pieces inserted into the slots of said stator core from the lead-out side and a group of coil pieces inserted from the opposite lead-out side.

12. The method of manufacturing according to claim 11, wherein:
a plurality of lead wires each having a shape formed is prepared by bending a straight flat wire into a crank shape, and
on the lead-out side in the rotating shaft direction,
before performing step b), one lead-out piece is arranged in an innermost peripheral slot hole on a start-point side that accommodates said inner coil pieces, and one lead-out piece is arranged in an outermost peripheral slot on the other side,
before performing step c), one lead-out piece is arranged in an innermost peripheral slot hole on a start-point side that accommodates said outer coil pieces, and one lead-out piece is arranged in an outermost peripheral slot on the other side, and
before performing step d), one lead-out piece is arranged in an innermost peripheral slot on one side among the slots accommodating said central coil pieces, and one lead-out piece is arranged in an outermost peripheral slot on the other side.

13. The method of manufacturing according to claim 12, comprising:
forming a protrusion or a recess at open ends of said inner coil piece, said outer coil piece, said central coil piece, and said lead-out piece on said lead-out side,
forming a recess or a protrusion corresponding to those on said lead-out side at open ends of said inner coil piece, said outer coil piece, and said central coil piece on said opposite lead-out side, and
electrically connecting said coil pieces by fitting the protrusions and recesses of said coil pieces on said lead-out side and said opposite lead-out side to each other in said slot holes of the bobbin.

14. The method of manufacturing according to claim 13, wherein:
execution of an assembly procedure of said b) and execution order of an assembly procedure of said c) are allowed to be reversed, and
execution of an assembly procedure of said f) and execution order of an assembly procedure of said g) are allowed to be reversed.

15. The method of manufacturing according to claim 14, wherein:
relative to a circumferential length of the coil-end portion of said central coil piece, the circumferential length of the coil end of said inner coil piece is shorter, and the circumferential length of the coil end of said outer coil piece is longer,
said central coil piece on said lead-out side is connected to said central coil piece on the opposite lead-out side,
said inner coil piece on said lead-out side is connected to said outer coil piece on the opposite lead-out side, and
said outer coil piece on said lead-out side is connected to the inner coil piece on said opposite lead-out side, thereby equalizing circumferential lengths of concentrically wound parts.
